(19) Europäisches Patentamt
European Patent Office
Office européen des brevets

(11) **EP 4 428 754 A1**

(12) **EUROPEAN PATENT APPLICATION**
published in accordance with Art. 153(4) EPC

(43) Date of publication:
**11.09.2024 Bulletin 2024/37**

(21) Application number: **22897807.8**

(22) Date of filing: **22.11.2022**

(51) International Patent Classification (IPC):
**G06N 3/04** (2023.01)      **G06N 3/08** (2023.01)

(52) Cooperative Patent Classification (CPC):
**G06N 3/04; G06N 3/0464; G06N 3/08; G06N 3/084**

(86) International application number:
**PCT/CN2022/133524**

(87) International publication number:
**WO 2023/093724 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 CN 202111405768**

(71) Applicant: **Huawei Technologies Co., Ltd.
Shenzhen, Guangdong 518129 (CN)**

(72) Inventors:
• **ZHAI, Zhiqiang
  Shenzhen, Guangdong 518129 (CN)**
• **LING, Qiaomin
  Shenzhen, Guangdong 518129 (CN)**
• **ZHANG, Xuetong
  Shenzhen, Guangdong 518129 (CN)**
• **ZHU, Zhongrui
  Shenzhen, Guangdong 518129 (CN)**

(74) Representative: **Maiwald GmbH
Engineering
Elisenhof
Elisenstrasse 3
80335 München (DE)**

(54) **NEURAL NETWORK MODEL PROCESSING METHOD AND DEVICE**

(57)    Embodiments of this application provide a neural network model processing method in the field of artificial intelligence. The method includes: performing operator splitting on a first subgraph in a first computation graph corresponding to a neural network model, to obtain a second computation graph, where the second computation graph includes a plurality of parallel subgraphs corresponding to the first subgraph, overheads of the plurality of subgraphs match computation capabilities of a plurality of processors, and the plurality of processors separately process computation tasks of the plurality of subgraphs. According to the method in this application, the plurality of processors can execute the computation tasks of the plurality of subgraphs in parallel, to improve model processing efficiency.

700

Obtain computation capabilities of m processors, where m is an integer greater than 1 — S710

Perform operator splitting on a first subgraph in a first computation graph corresponding to a neural network model, to obtain a second computation graph, where the second computation graph includes n parallel subgraphs corresponding to the first subgraph, and overheads of the n subgraphs and computation capabilities of n of the m processors meet a first matching relationship, where 1<n≤m, and n is an integer — S720

Allocate computation tasks of p subgraphs of the second computation graph to the m processors for execution, where the p subgraphs include the n subgraphs, computation tasks of the n subgraphs are respectively allocated to the n processors for execution, and each of the n processors executes one of the computation tasks of the n subgraphs, where p is an integer greater than or equal to n — S730

FIG. 7

**Description**

This application claims priority to Chinese Patent Application No. 202111405768.3, filed with the China National Intellectual Property Administration on November 24, 2021 and entitled "NEURAL NETWORK MODEL PROCESSING METHOD AND APPARATUS", which is incorporated herein by reference in its entirety.

**TECHNICAL FIELD**

This application relates to the field of artificial intelligence technologies, and specifically, to a neural network model processing method and apparatus.

**BACKGROUND**

Artificial intelligence (artificial intelligence, AI) refers to a theory, a method, a technology, and an application system that are used to simulate, extend, and expand human intelligence by using a digital computer or a machine controlled by a digital computer, to perceive an environment, obtain knowledge, and obtain an optimal result by using the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

With development of neural network models, complexity of the model is increasingly high, a scale of the model is gradually increased, and a latency of an operation process is increasingly long. A device-side inference scenario is used as an example. Currently, an operator in a neural network model is usually deployed based on a hardware priority. For example, if a priority of a graphics processing unit (graphics processing unit, GPU) is higher than a priority of a central processing unit (central processing unit, CPU), the operator is deployed on the GPU as much as possible, and an operator that is not supported by the GPU is deployed on the CPU. This solution can ensure running of a model. However, a processing speed of the CPU is lower than a processing speed of the GPU, which affects an overall processing speed of the model. Therefore, it is an important optimization direction that a neural network model can run on a neural network processor such as a GPU or an NPU as a whole. However, when a single neural network processor is used to run a model, other hardware is in an idle state, resulting in a waste of resources.

Therefore, how to improve processing efficiency of a neural network model becomes an urgent problem to be resolved.

**SUMMARY**

Embodiments of this application provide a neural network model processing method and apparatus, so that computation tasks can be allocated to a plurality of processors for parallel execution through operator splitting, to improve processing efficiency of a neural network model.

According to a first aspect, a neural network model processing method is provided. The method includes: obtaining computation capabilities of m processors, where m is an integer greater than 1; performing operator splitting on a first subgraph in a first computation graph corresponding to the neural network model, to obtain a second computation graph, where the second computation graph includes n parallel subgraphs corresponding to the first subgraph, overheads of the n subgraphs and computation capabilities of n of the m processors meet a first matching relationship, where $1 < n \leq m$, and n is an integer; and allocating computation tasks of p subgraphs of the second computation graph to the m processors for execution, where the p subgraphs includes the n subgraphs, computation tasks of the n subgraphs are respectively allocated to the n processors for execution, each of the n processors executes one of the computation tasks of the n subgraphs, where p is an integer greater than or equal to n.

In this embodiment of this application, operator splitting is performed the first subgraph based on computation capabilities of different processors, to obtain a plurality of parallel subgraphs that match the computation capabilities of the different processors, so that computation tasks of the plurality of parallel subgraphs can be executed in parallel on processors that match the computation capabilities. This helps appropriately use hardware resources, to improve model processing efficiency.

The m processors are configured to perform an operation of a neural network model.

The n parallel subgraphs corresponding to the first subgraph are n subgraphs obtained by performing operator splitting on the first subgraph.

With reference to the first aspect, in some implementations of the first aspect, overheads of the first subgraph are greater than overheads of at least half of subgraphs of the first computation graph.

With reference to the first aspect, in some implementations of the first aspect, the overheads of the first subgraph are greater than or equal to a second threshold.

In this way, operator splitting is performed only on a subgraph with high overheads, to help ensure that performance improvement caused by parallel execution exceeds introduced communication overheads, so as to improve model processing efficiency. In addition, when the plurality of processors cannot share a memory, the processor needs to store a parameter of an operator in a subgraph that needs to be executed, to execute a computation task of the subgraph. According to the solution in this embodiment of this application, operator splitting is performed only on a subgraph with high overheads, so that excessive memory overheads caused by operator splitting can be avoided.

With reference to the first aspect, in some implementations of the first aspect, when the first subgraph includes a plurality of operators, an execution order of all operators in the first subgraph is serial execution.

A computation amount of a convolution operator is usually large. For example, the first subgraph may be a continuous convolution structure, that is, the first subgraph may include a plurality of continuous convolution operators.

In the solution of this embodiment of this application, the first subgraph includes a plurality of topologically ordered operators. Operator splitting is performed on the first subgraph, and the computation tasks of the n subgraphs obtained after splitting are allocated to the corresponding processors. In other words, after computation tasks of the plurality of operators are split, computation tasks obtained after splitting are allocated to corresponding processors. After the processors complete, in a topological order, the computation tasks obtained after splitting, computation results of the processors are merged to obtain a computation result of the first subgraph. In this way, communication overheads introduced by splitting can be reduced, and model processing efficiency is ensured.

With reference to the first aspect, in some implementations of the first aspect, the second computation graph further includes a split operator, and the split operator is used to perform data splitting on input data of the first subgraph, to obtain input data of the n subgraphs.

With reference to the first aspect, in some implementations of the first aspect, a dimension of the data splitting is determined based on a data arrangement status of the input data of the first subgraph.

Specifically, input data of each of the n subgraphs is continuous data in data arrangement of the input data of the first subgraph.

Determining the dimension of the data splitting based on the data arrangement status helps ensure that input data obtained after splitting is continuous data, that is, the input data obtained after splitting is continuously read during reading, to avoid excessive overheads caused by reading data by jumping, and help ensure processing performance of the model.

With reference to the first aspect, in some implementations of the first aspect, when the data arrangement of the input data includes a batch N, a height H, a width W, and a quantity C of channels, the input data of the n subgraphs is obtained by splitting the input data of the first subgraph based on a height dimension.

When a batch size N of the input data is 1, the input data cannot be split in the dimension. When being split based on an H axis, data obtained after splitting is continuous data. However, if splitting is performed based on a W axis and a C axis, data needs to be read by jumping, that is, data is read at an interval, which increases overheads of bottom-layer data synchronization. Consequently, processing performance of the model cannot be improved. In the solution in this embodiment of this application, the input data is split based on the H axis, and the computation tasks are allocated to the different processors for parallel processing, to effectively improve processing performance of the model.

With reference to the first aspect, in some implementations of the first aspect, when an operator in the first subgraph is a convolution-type operator, and a slide stride of the convolution-type operator is less than a height of a convolution kernel, some data in input data of at least two of the n subgraphs is the same.

That is, the input data of at least two of the n subgraphs overlaps. Specifically, the input data of at least two of the n subgraphs overlaps in the height dimension.

In this embodiment of this application, when the operator in the first subgraph is the convolution-type operator, splitting with overlap of input data can ensure that a result of output data of the first subgraph and a result obtained after output data of the n subgraphs are merged is the same, to ensure that a computation result of the second computation graph is the same as a computation result of the first computation graph.

With reference to the first aspect, in some implementations of the first aspect, the second computation graph further includes a merge operator, and the merge operator is used to merge the output data of the n parallel subgraphs, to obtain the output data of the first subgraph.

With reference to the first aspect, in some implementations of the first aspect, that overheads of the n subgraphs and computation capabilities of n of the m processors meet a first matching relationship includes: A difference between a ratio of the overheads of the n subgraphs and a ratio of the computation capabilities of the n processors is less than or equal to a first threshold.

In this way, it can be ensured that a processor with a high computation capability executes a computation task of a subgraph with high overheads, and a processor with a low computation capability executes of a computation task of a subgraph with low overheads, to improve an adaptation degree between a computation capability of a processor and overheads of a subgraph, and help further improve model processing efficiency.

With reference to the first aspect, in some implementations of the first aspect, the p subgraphs include q parallel subgraphs in the first computation graph, computation tasks of the q subgraphs are respectively allocated to q of the m processors for execution, each of the q processors executes one of the computation tasks of the q subgraphs, and overheads of the q subgraphs and computation capabilities of the q processors meet a second matching relationship, where q is an integer greater than 1.

In this embodiment of this application, subgraphs that can be executed in parallel are deployed on a plurality of processors based on computation capabilities of different processors, so that computation tasks of the plurality of parallel subgraphs can be executed in parallel on the processors that match the computation capabilities, and hardware resources are appropriately used, to improve model processing efficiency.

With reference to the first aspect, in some implementations of the first aspect, the allocating computation tasks of p subgraphs of the second computation graph to the m processors for execution includes: converting the p subgraphs into p actors Actor respectively; and scheduling, in an execution process of the p Actors, the m processors to execute the computation tasks of the p subgraphs.

Behaviors of the p Actors are defined based on computation tasks of the p subgraphs.

In the solution in this embodiment of this application, an Actor model is used as an asynchronous scheduling framework, and corresponding processors can be scheduled to execute computation tasks in parallel.

According to a second aspect, a neural network model processing apparatus is provided. The apparatus includes units configured to perform the method according to any one of the first aspect or the implementations of the first aspect.

It should be understood that extensions, definitions, explanations, and descriptions of related content in the first aspect are also applicable to same content in the second aspect.

According to a third aspect, a neural network model processing apparatus is provided. The apparatus includes: a memory, configured to store a program; and a processor, configured to execute the program stored in the memory. When the program stored in the memory is executed, the processor is configured to perform the method according to any one of the first aspect and the implementations of the first aspect.

The processor in the third aspect may be a central processing unit (central processing unit, CPU), or may be a combination of a CPU and a neural network operation processor. The neural network operation processor herein may include a graphics processing unit (graphics processing unit, GPU), a neural network processing unit (neural network processing unit, NPU), a tensor processing unit (tensor processing unit, TPU), and the like. The TPU is an artificial intelligence accelerator-specific integrated circuit customized by Google (Google) for machine learning.

According to a fourth aspect, a computer-readable medium is provided. The computer-readable medium stores program code to be executed by a device, and the program code is used to perform the method according to any one of the first aspect or implementations of the first aspect.

According to a fifth aspect, a computer program product including instructions is provided. When the computer program product is run on a computer, the computer is enabled to perform the method according to any one of the first aspect or implementations of the first aspect.

According to a sixth aspect, a chip is provided. The chip includes a processor and a data interface. The processor reads, through the data interface, instructions stored in a memory, to perform the method according to any one of the first aspect or and the implementations of the first aspect.

Optionally, in an implementation, the chip may further include a memory, and the memory stores instructions. The processor is configured to execute the instructions stored in the memory, and when the instructions are executed, the processor is configured to perform the method according to any one of the first aspect or and the implementations of the first aspect.

## BRIEF DESCRIPTION OF DRAWINGS

FIG. 1 is a schematic diagram of an artificial intelligence main framework according to an embodiment of this application;

FIG. 2 is a schematic diagram of a structure of a system architecture according to an embodiment of this application;

FIG. 3 is a schematic diagram of a structure of a convolutional neural network according to an embodiment of this application;

FIG. 4 is a schematic diagram of another system architecture according to an embodiment of this application;

FIG. 5 is a schematic diagram of a device-side inference framework according to an embodiment of this application;

FIG. 6 is a schematic diagram of another device-side inference framework according to an embodiment of this application;

FIG. 7 is a schematic diagram of a neural network model processing method according to an embodiment of this application;

FIG. 8 is a schematic flowchart of operator splitting according to an embodiment of this application;

FIG. 9 is a schematic flowchart of a convolution operator operation process according to an embodiment of this application;

FIG. 10 is a schematic diagram of another neural network model processing method according to an embodiment of this application;

FIG. 11 is a schematic flowchart of a heterogeneous graph composition process according to an embodiment of this application;

FIG. 12 is a schematic flowchart of another operator splitting process according to an embodiment of this application;

FIG. 13 is a schematic flowchart of a heterogeneous parallel graph composition process according to an embodiment of this application;

FIG. 14 is a schematic flowchart of a heterogeneous parallel execution phase according to an embodiment of this application;

FIG. 15 is a schematic block diagram of a neural network model processing apparatus according to an embodiment of this application; and

FIG. 16 is a schematic block diagram of another neural network model processing apparatus according to an embodiment of this application.

## DESCRIPTION OF EMBODIMENTS

The following describes technical solutions of the embodiments in this application with reference to accompanying drawings.

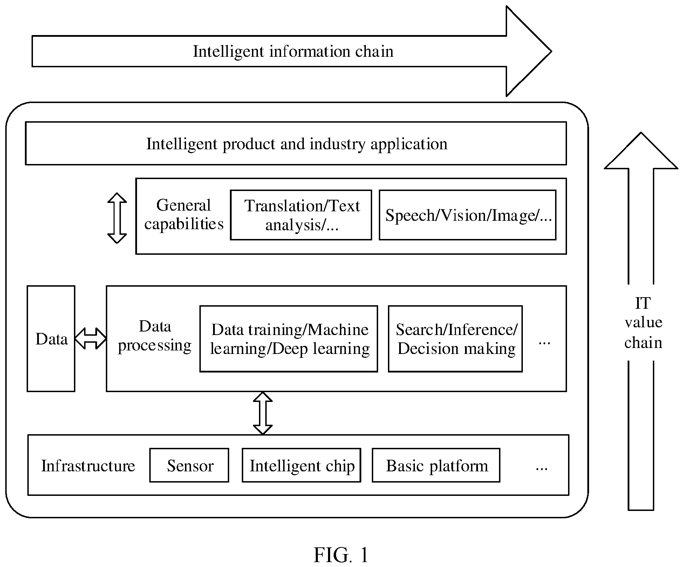

FIG. 1 is a schematic diagram of an artificial intelligence main framework. The main framework describes an overall working procedure of an artificial intelligence system, and is applicable to a requirement of a general artificial intelligence field.

The following describes in detail the foregoing artificial intelligence main framework from two dimensions: "intelligent information chain" (horizontal axis) and "information technology (information technology, IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computation capability support for the artificial intelligence system, implements communication with the external world, and implements support by using a basic platform.

The infrastructure can communicate with the outside by using a sensor, and a computation capability of the infrastructure can be provided by a smart chip.

The smart chip herein may be a hardware acceleration chip such as a central processing unit (central processing unit, CPU), a neural network processing unit (neural network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platforms, for example, a distributed computation framework and a network, for assurance and support, including cloud storage and computation, an interconnection network, and the like.

For example, the infrastructure can communicate with the outside by using the sensor, to obtain data, and the data is provided to a smart chip in a distributed computation system provided by the basic platform for computation.

(2) Data

Data at an upper layer of the infrastructure indicates a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

The foregoing data processing usually includes a processing manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

(4) General-purpose capability

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

The smart product and the industry application are a product and an application of the artificial intelligence system in various fields, and are package of an overall solution of artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

Embodiments of this application may be used in many fields of artificial intelligence, for example, fields such as smart manufacturing, smart transportation, smart home, smart health care, smart security protection, autonomous driving, and a safe city.

Specifically, embodiments of this application may be applied to fields in which a (deep) neural network needs to be used, for example, autonomous driving, image classification, image retrieval, image semantic splitting, image quality enhancement, image super-resolution processing, and natural language processing, especially applicable to a task scenario that requires a low latency.

The following briefly describes the two application scenarios: image classification and monitoring.

Image classification:

When a user stores a large quantity of images on a terminal device (for example, a mobile phone) or a cloud disk, recognition of images in an album may help the user or a system perform classification management on the album. This improves user experience.

According to the neural network model processing method in embodiments of this application, a processing speed of a neural network model can be improved, that is, a speed of classifying an image is improved, and a delay is reduced. This helps to label images of different categories in real time, so that a user can view and search for the image. In addition, classification labels of the images may also be provided for an album management system to perform the classification management. This saves management time of the user, improves album management efficiency, and improves user experience.

Monitoring:

Monitoring scenarios include: smart city, field monitoring, indoor monitoring, outdoor monitoring, in-vehicle monitoring and so on. In a smart city scenario, a plurality of attributes need to be identified, for example, pedestrian attribute identification and riding attribute identification. A deep neural network plays an important role in identification of the plurality of attributes through a powerful capability of the deep neural network.

According to the neural network model processing method in embodiments of this application, processing efficiency of the neural network model can be improved. This helps to process an input road picture in real time, and identify different attribute information in the road picture more quickly.

Because embodiments of this application relate to wide application of a neural network, for ease of understanding, the following first describes terms and concepts related to the neural network that may be used in embodiments of this application.

(1) Neural network

The neural network may include neural units. The neural unit may be an operation unit that uses $x_s$ and an intercept of 1 as an input. An output of the operation unit may be as follows:

$$h_{W,b}(x) = f(W^T x) = f(\sum_{s=1}^{n} W_s x_s + b) \qquad (1-1)$$

s=1, 2, ..., n, where n is a natural number greater than 1, $W_s$ is a weight of $x_s$, b is an offset of a neural element.

f is an activation function (activation function) of the neural unit, and is used to introduce a non-linear characteristic into the neural network, to convert an input signal in the neural unit into an output signal. An output signal of the activation function may be used as an input of a next layer. For example, the activation function may be a ReLU, tanh, or sigmoid function.

The neural network is a network constituted by linking a plurality of single neural units together. To be specific, an output of one neural unit may be an input of another neural unit. An input of each neural unit may be connected to a local receptive field of a last layer, to extract a feature of the local receptive field. The local receptive field may be a region including several neural units.

(2) Deep neural network

The deep neural network (deep neural network, DNN), also referred to as a multi-layer neural network, may be understood as a neural network having a plurality of hidden layers. The DNN is divided based on locations of different layers, so that the neural network in the DNN may be classified into three types: an input layer, a hidden layer, and an output layer. Generally, a first layer is an input layer, a last layer is an output layer, and all intermediate layers are hidden layers. Layers are fully connected. To be specific, any neuron at an $i^{th}$ layer is necessarily connected to any neuron at an $(i+1)^{th}$ layer.

Although the DNN seems complex, it is not complex in terms of work at each layer. Briefly, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha(\ )$ is an activation function. At each layer, such a simple operation is performed on the input vector $\vec{x}$, to obtain the output vector. Because the DNN includes a large quantity of layers, there are also a large quantity of coefficients W and offset vectors $\vec{b}$. Definitions of these parameters in the DNN are as follows: A coefficient $W$ is used as an example. It is assumed that in a DNN having three layers, a linear coefficient from a fourth neuron at a second layer to a second neuron at a third layer is defined as $W_{24}^{3}$. A superscript 3 represents a layer at which the coefficient W is located, and subscripts are corresponding to an output index 2 of the third layer and an input index 4 of the second layer.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter W a t the input layer. In the deep neural network, more hidden layers enable the network to be more capable of describing a complex situation in the real world. Theoretically, a model with more parameters has higher complexity and a larger "capacity". This indicates that the model can complete a more complex learning task. A process of training the deep neural network is a process of learning a weight matrix, and a final objective of training is to obtain weight matrices (weight matrices formed by vectors W at a plurality of layers) of all layers of a trained deep neural network.

(3) Convolutional neural network

The convolutional neural network (convolutional neuron network, CNN) is a deep neural network with a convolutional structure. The convolutional neural network includes a feature extractor that includes a convolutional layer and a sub sampling layer, and the feature extractor may be considered as a filter. The convolution layer is a neuron layer that is in the convolutional neural network and that performs convolution processing on an input signal. At the convolution layer in the convolutional neural network, on neuron may be connected only to some adjacentlayer neurons. One convolutional layer usually includes several feature planes, and each feature plane may include some neural units that are in a rectangular arrangement. Neural units of a same feature map share a weight, and the shared weight herein is a convolution kernel. The shared weight may be understood as that an image information extraction manner is irrelevant to a location. The convolution kernel may be initialized in a form of a random-size matrix. An appropriate weight may be obtained by the convolution kernel through learning in a convolutional neural network training process. In addition, direct benefit of the shared weight is to reduce connections between the layers of the convolutional neural network, while reducing risk of overfitting.

(4) Computation graph

The computation graph corresponding to a neural network model is used to indicate a computation process of the neural network model. In other words, the computation graph corresponding to the neural network model may be understood as a representation form of the computation process of the neural network model.
Any part of one computation graph may be used as a subgraph of the computation graph, and the computation graph itself may also be considered as a subgraph of the computation graph itself. The any part of the computation graph may also be understood as any graph structure in the computation graph.
The subgraph of the computation graph may also be referred to as a graph structure of the computation graph.
Overheads of the graph may include computation overheads of the graph. The computation overheads of the graph are computation overheads of computation tasks corresponding to all the operators in the graph. The computation overheads may also be referred to as a computation amount.
Further, the overheads of the graph may further include communication overheads of the graph.

(5) Actor (Actor) framework

The Actor framework may also be referred to as an Actor model. The Actor model is used to process concurrent computation.
An Actor refers to a basic computation unit, and the actor receives a message and performs computation based on it. In the Actor model, each Actor has an address and can communicate with each other by sending messages. The Actors are completely independent and can perform operations separately at the same time. The Actors can run on a same computer or different computers.
The Actor model usually has two task scheduling manners: thread-based scheduling and event-based scheduling.
Thread-based scheduling: A thread is allocated to each Actor. When receiving a message, if a mailbox (mail box) of a current Actor is empty, a current thread is blocked.
Event-based scheduling: An event can be understood as a task or event. In this case, a thread is allocated to an Actor and executed.
An input of the Actor is a received message. After receiving the message, the Actor processes a task defined in the message. After processing the task, the Actor can send the task to other another Actor.
In a system, a large-scale task may be divided into a plurality of small tasks, and these small tasks may be concurrently executed by a plurality of Actors, to reduce a task completion time.

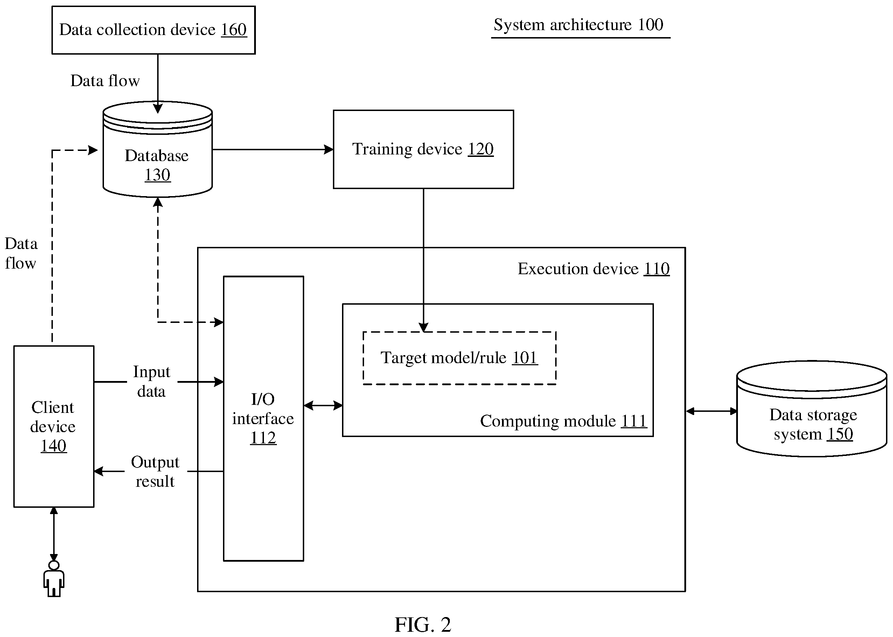

FIG. 2 shows a system architecture 100 according to an embodiment of this application. In FIG. 2, a data collection device 160 is configured to collect training data. For example, if training data is image data, the training data may include a training image and a processing result corresponding to the training image. For example, a classification result corresponding to the training image may be a result of manual pre-labeling.
After collecting the training data, the data collection device 160 stores the training data in a database 130, and a training device 120 obtains a target model/rule 101 through training based on the training data maintained in the database 130.
The following describes how the training device 120 obtains the target model/rule 101 based on the training data. The training device 120 processes input original training data, and compares an output value with a target value until a difference between a value that is output by the training device 120 and the target value is less than a specific threshold, to complete training of the target model/rule 101.
The target model/rule 101 in this embodiment of this application may be specifically a neural network model, for example, a convolutional neural network or a residual network. It should be noted that, in actual application, the training data maintained in the database 130 is not necessarily all collected by the data collection device 160, and may be received from another device. In addition, it should be noted that the training device 120 trains the target model/rule 101 not necessarily completely based on the training data maintained in the database 130, and may obtain training data from a cloud or another place to perform model training. The foregoing descriptions should not be construed as a limitation on this embodiment of this application.
The target model/rule 101 obtained by the training device 120 through training may be applied to different systems or devices, for example, applied to an execution device 110 in FIG. 2. The execution device 110 may be a terminal, for example, a mobile phone terminal, a tablet computer, a notebook computer, augmented reality (augmented reality, AR) AR, virtual reality (virtual reality, VR), or an in-vehicle terminal; or may be a server or a cloud, or the like. In FIG. 2, an input/output (input/output, I/O) interface 112 is configured for an execution device 110, and is configured to exchange data with an external device. A user may input data to the I/O interface 112 by using a client device 140.

In a related processing procedure in which the execution device 110 preprocesses the input data or a computing module 111 of the execution device 110 performs computation, the execution device 110 may invoke data, code, and the like in a data storage system 150 to implement corresponding processing, or may store, into the data storage system 150, data, an instruction, and the like obtained through corresponding processing.

Finally, the I/O interface 112 returns a processing result, for example, the foregoing obtained processing result of the data, to a client device 140, to provide the processing result for the user.

It should be noted that the training device 120 may generate a corresponding target model/rule 101 based on different training data for different targets or different tasks. The corresponding target model/rule 101 may be used to implement the foregoing targets or complete the foregoing tasks, so as to provide a required result for the user.

In a case shown in FIG. 2, the user may manually input data and the manual operation may be performed in an interface provided by the I/O interface 112. In another case, the client device 140 may automatically send input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner, for example, display, sound, or an action. The client device 140 may also serve as a data collector to collect, as new sample data, the input data that is input into the I/O interface 112 and the output result that is output from the I/O interface 112 that are shown in the figure, and store the new sample data into the database 130. Certainly, alternatively, the client device 140 may not perform collection, but the I/O interface 112 directly uses, as new sample data, the input data that is input into the I/O interface 112 and the output result that is output from the I/O interface 112 that are shown in the figure, and stores the new sample data into the database 130.

It should be noted that FIG. 2 is merely a schematic diagram of a system architecture according to an embodiment of this application. A location relationship between a device, a component, a module, and the like shown in the figure constitutes no limitation. For example, in FIG. 2, the data storage system 150 is an external memory relative to the execution device 110. In another case, the data storage system 150 may be alternatively disposed in the execution device 110.

As shown in FIG. 2, the target model/rule 101 is obtained through training based on the training device 120. The target model/rule 101 may be a neural network model in this application in embodiments of this application. Specifically, the neural network model in embodiments of this application may be a CNN, a residual network, or the like.

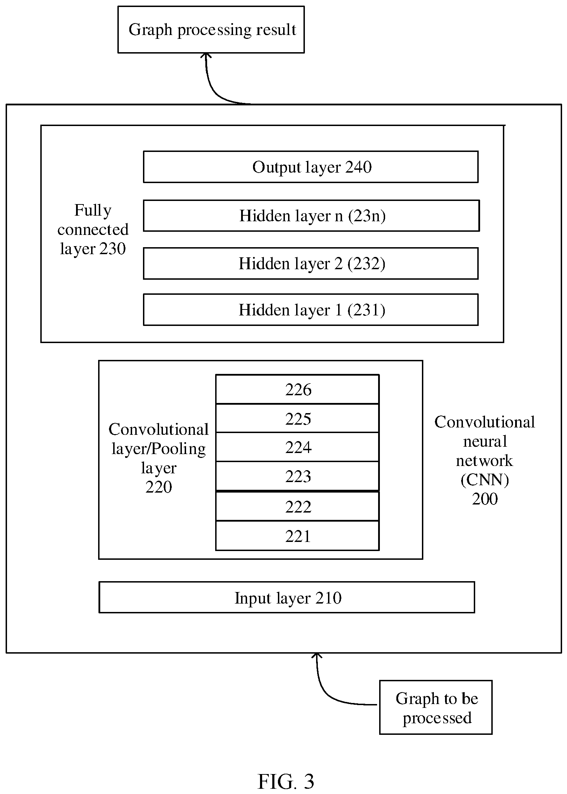

Because the CNN is a very common neural network, a structure of the CNN is described below in detail with reference to FIG. 3. As described in the foregoing basic concepts, the convolutional neural network is a deep neural network having a convolutional structure, and is a deep learning (deep learning) architecture. The deep learning architecture means performing a plurality of levels of learning on different abstract layers by using a machine learning algorithm. As a deep learning architecture, the CNN is a feed-forward (feed-forward) artificial neural network. Neurons in the feed-forward artificial neural network may respond to an image input into the feed-forward artificial neural network.

As shown in FIG. 3, a convolutional neural network (CNN) 200 may include an input layer 210, convolution layers/pooling layers 220 (where the pooling layers are optional), and a fully connected layer (fully connected layer) 230.

Convolutional layer/pooling layer 220:

Convolutional layer:

As shown in FIG. 3, for example, the convolutional layer/pooling layer 220 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. That is, an output of a convolutional layer may be used as an input of a subsequent pooling layer, or may be used as an input of another convolutional layer to continue a convolution operation.

The following describes an internal operating principle of a convolution layer by using the convolution layer 221 as an example.

The convolutional layer 221 is used as an example. The convolutional layer 221 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride stride) in a horizontal direction on the input image, to extract a specific feature from the image. A size of the weight matrix should be related to a size of the image. It should be noted that a depth dimension (depth dimension) of the weight matrix is the same as a depth dimension of the input image. In a process of performing a convolution operation, the weight matrix extends to an entire depth of the input image. Therefore, one convolutional output with a single depth dimension is generated after convolution is performed by using a single weight matrix. However, in most cases, a plurality of weight matrices with a same size (rows×columns), namely, a plurality of homotypic matrices, are applied instead of a single weight matrix. Outputs of the weight matrices are stacked to form a depth dimension of a convolutional image. The dimension herein may be understood as being determined based on the foregoing "plurality". Different weight matrices may be used to extract different features of an image. For example, a weight matrix is used to extract edge information of the image, another weight matrix is used to extract a specific color of the image, and still another weight matrix is used to blur unnecessary noise in the image. The plurality of weight matrices have the same size (rows×columns). Feature graphs extracted by using the plurality of weight matrices with the same size also have a same size. Then the plurality of extracted feature graphs with the same size are merged to form a convolution operation output.

In actual application, weighted values in the weight matrices need to be obtained through massive training. Weight matrices formed by weighted values obtained through training may be used to extract information from an input image, so that the convolutional neural network 200 performs correct prediction.

When the convolutional neural network 200 includes a plurality of convolutional layers, a larger quantity of general features are usually extracted at an initial convolutional layer (for example, the convolutional layer 221). The general features may be also referred to as low-level features. As a depth of the convolutional neural network 200 increases, a feature extracted at a more subsequent convolutional layer (for example, the convolutional layer 226) is more complex, for example, a high-level semantic feature. A feature with higher semantics is more applicable to a to-be-resolved problem.

Pooling layer:

Because a quantity of training parameters usually needs to be reduced, the pooling layer usually needs to be periodically introduced after a convolutional layer. To be specific, for the layers 221 to 226 in the 220 shown in FIG. 3, one convolutional layer may be followed by one pooling layer, or a plurality of convolutional layers may be followed by one or more pooling layers. During image processing, an only objective of a pooling layer is to reduce a space size of an image. The pooling layer may include an average pooling operator and/or a maximum pooling operator, to perform sampling on an input image to obtain an image with a small size. The average pooling operator may be used to perform computation on pixel values in the image in a specific range, to generate an average value. The average value is used as an average pooling result. The maximum pooling operator may be used to select a pixel with a maximum value in a specific range as a maximum pooling result. In addition, a size of a weight matrix at a convolution layer should be related to an image size, and similarly, an operator at a pooling layer should also be related to an image size. A size of a processed image output from the pooling layer may be less than a size of an image input into the pooling layer. Each pixel in the image output from the pooling layer indicates an average value or a maximum value of a corresponding sub-region of the image input into the pooling layer.

Fully connected layer 230:

After processing is performed at the convolutional layer/pooling layer 220, the convolutional neural network 200 still cannot output required output information. As described above, at the convolutional layer/pooling layer 220, only a feature is extracted, and parameters resulting from an input image are reduced. However, to generate final output information (required class information or other related information), the convolutional neural network 200 needs to generate, by using the fully connected layer 230, one output or a group of outputs whose quantity is equal to a quantity of required classes. Therefore, the fully connected layer 230 may include a plurality of hidden layers (231, 232, ..., and 23n shown in FIG. 3). Parameters included in the plurality of hidden layers may be obtained through pre-training based on related training data of a specific task type. For example, the task type may include image recognition, image classification, and super-resolution image reconstruction.

The plurality of hidden layers in the fully connected layer 230 are followed by the output layer 240, namely, the last layer of the entire convolutional neural network 200. The output layer 240 has a loss function similar to a classification cross entropy, and the loss function is specifically used to calculate a prediction error. Once forward propagation (for example, propagation from the layer 210 to the layer 240 in FIG. 3 is forward propagation) of the entire convolutional neural network 200 is completed, back propagation (for example, propagation from the layer 240 to the layer 210 in FIG. 3 is back propagation) is started to update weight values and deviations of the layers mentioned above, to reduce a loss of the convolutional neural network 200 and an error between a result output by the convolutional neural network 200 by using the output layer and an ideal result.

It should be noted that the convolutional neural network 200 shown in FIG. 3 is merely used as an example of a convolutional neural network. In specific application, the convolutional neural network may alternatively exist in a form of another network model, for example, include only a part of the network structure shown in FIG. 3.

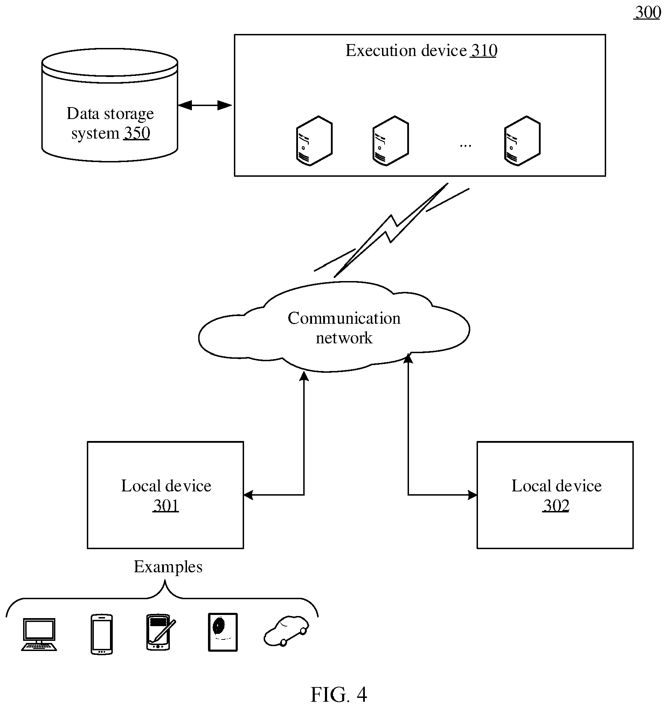

FIG. 4 shows a system architecture 300 according to an embodiment of this application. The system architecture includes a local device 301, a local device 302, an execution device 310, and a data storage system 350. The local device 301 and the local device 302 are connected to the execution device 310 through a communication network.

The execution device 310 may be implemented by one or more servers. Optionally, the execution device 310 may cooperate with another computation device, for example, a device such as a data memory, a router, or a load balancer. The execution device 310 may be disposed on one physical site, or distributed on a plurality of physical sites. The execution device 310 may implement the neural network model processing method in embodiments of this application by using data in the data storage system 350 or by invoking program code in the data storage system 350.

Specifically, in an implementation, the execution device 310 may perform the following process:

obtaining computation capabilities of m processors, where m is an integer greater than 1;

performing operator splitting on a first subgraph in a first computation graph corresponding to the neural network model, to obtain a second computation graph, where the second computation graph includes n parallel subgraphs corresponding to the first subgraph, overheads of the n subgraphs and computation capabilities of n of the m processors meet a first matching relationship, where $1<n\leq m$, and n is an integer; and

allocating computation tasks of p subgraphs of the second computation graph to the m processors for execution, where the p subgraphs includes the n subgraphs, computation tasks of the n subgraphs are respectively allocated to the n processors for execution, each of the n processors executes one of the computation tasks of the n subgraphs, where p is an integer greater than or equal to n.

A user may operate user equipment (for example, a local device 301 and a local device 302) of the user to interact with the execution device 310. Each local device may represent any computation device, for example, a personal computer, a computer workstation, a smart phone, a tablet computer, an intelligent camera, a smart automobile, another type of cellular phone, a media consumption device, a wearable device, a set-top box, or a game console.

The local device of each user may interact with the execution device 310 through a communication network of any communication mechanism/communication standard. The communication network may be a wide area network, a local area network, a point-to-point connection, or any combination thereof.

In an implementation, the local device 301 and the local device 302 obtain a related parameter of a neural network model from the execution device 310, deploy the neural network model on the local device 301 and the local device 302, and perform image classification, image processing, speech processing, text processing, or the like by using the neural network model processing method in embodiments of this application.

In another implementation, a neural network model may be directly deployed on the execution device 310. The execution device 310 obtains to-be-processed data from the local device 301 and the local device 302, and processes the to-be-processed data by using the neural network model processing method in embodiments of this application.

Alternatively, the execution device 310 may be a cloud device. In this case, the execution device 310 may be deployed on a cloud. Alternatively, the execution device 310 may be a terminal device. In this case, the execution device 310 may be deployed on a user terminal side. This is not limited in this embodiment of this application.

Currently, processing efficiency of a neural network model may be improved in a data parallel manner. For example, a server end may evenly allocate a large amount of data to each distributed machine based on a quantity of distributed machines. Each distributed machine processes the allocated data based on a computation graph of the neural network model. However, the data parallel manner is usually applied to a training scenario of a large-scale neural network model. In an inference scenario with a high real-time requirement, a data volume processed each time, for example, a single image, is small. The data parallel manner cannot implement even data allocation, and it is difficult to improve model processing efficiency. In addition, the data parallel processing manner introduces extra data synchronization overheads and memory overheads. Especially for a device side, a computation capability and a storage capability of hardware are limited, and data synchronization overheads and memory overheads cannot be met. Especially in a scenario with a high delay requirement, it is difficult to significantly improve processing efficiency of a neural network model.

In addition, a multi-core processor may be further used to run the neural network model, to improve processing efficiency of the neural network model. In other words, a plurality of cores in the multi-core processor jointly perform an operation of the neural network model. However, in this solution, only computation resources of a single processor are used, and improvement of processing efficiency is excessively dependent on a computation capability of the processor, and other processors are in an idle state, causing a waste of resources.

Embodiments of this application provide a neural network model processing method, to improve neural network model processing efficiency.

The solutions in the embodiments of this application may be applied to a training scenario of a neural network model, or may be applied to an inference scenario of a neural network model. Usually, an inference scenario has a higher requirement on processing performance. Embodiments of this application are mainly described by using an example in which the solutions in the embodiments of this application are applied to an inference scenario.

Compared with deploying and running a neural network model on a server end, a device side has advantages such as high real-time performance, data privacy protection, and cloud resource saving. Deploying and running a neural network model on a device side are increasingly applied. For ease of description and understanding, embodiments of this application are mainly described by using an example in which the solutions in the embodiments of this application are applied to a device-side inference scenario.

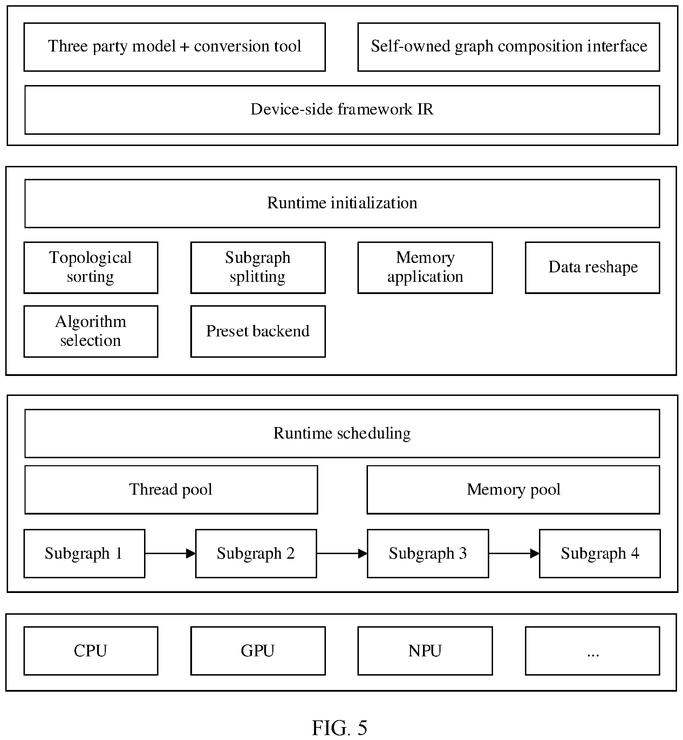

FIG. 5 shows an overall architecture of device-side inference. A deep learning framework is configured to convert a deep learning task expressed by a neural network model into execution and data that can be executed on a processor.

Frameworks on a device side have respective model representations. Inference is performed based on the model in an inference process. An offline model is an offline file of the model representation of the framework.

As shown in FIG. 5, the device-side framework may convert, by using a conversion tool, a third-party model built under another device-side framework, to obtain an offline file of an intermediate representation (intermediate representation, IR) of the current device-side framework. Alternatively, the device-side framework may obtain, by using a self-owned graph composition interface, a computation graph of a model constructed in the current device-side framework.

In the runtime initialization phase, the offline file is read to generate a runtime topology, initialize each operator node in the topology, and define an actual behavior of the operator during runtime. This phase is used to prepare for a runtime scheduling phase and reduce performance overheads of the runtime scheduling. Specifically, in this phase, operations such as topology sorting, data rearrangement, memory application, algorithm selection, backend presetting, and subgraph division may be performed.

The backend presetting may also be referred to as operator hardware deployment selection. Specifically, a backend of an operator in the model may be preset based on a user setting, a running environment, an operator support status, and the like. For example, if a user sets to enable a CPU, the operator needs to be deployed on the CPU. For another example, if the user sets to enable an NPU, but a running device does not include an NPU, the operator is deployed on other hardware, for example, a CPU. For another example, if the user sets to enable an NPU, and the running device includes an NPU, but the NPU does not support an operation of an operator, the operator needs to be deployed on other hardware, for example, a CPU.

Algorithm selection refers to selecting a specific algorithm for an operator to implement an operation process. For example, for a convolution operator, a convolution operation may be implemented by using a 1*1 algorithm, a winograd algorithm, an Img2Col algorithm, a sliding window algorithm, or the like.

Specifically, a kernel (kernel) object of the operator may be generated after each operation in an initialization phase, and each subgraph stores a kernel object of an operator in a subgraph based om a topological order.

In the runtime scheduling phase, that is, a device-side inference phase, a corresponding hardware, such as a CPU, an NPU, or a GPU, is invoked based on topology constructed in the runtime initialization phase and operator information in a graph to perform inference on input data of the user. That is, during runtime, corresponding hardware is invoked in sequence to sequentially execute a run (run) function of a kernel object, to implement an operator operation. For example, a topology graph is split into a subgraph 1, a subgraph 2, a subgraph 3, and a subgraph 4, and the subgraph 1, the subgraph 2, the subgraph 3, and the subgraph 4 are sequentially executed on corresponding hardware in a sequence of the subgraph 1, the subgraph 2, the subgraph 3, and the subgraph 4, to obtain an output result. In a process of executing one piece of hardware, other pieces of hardware are in an idle state, which causes a waste of resources and cannot improve inference performance.

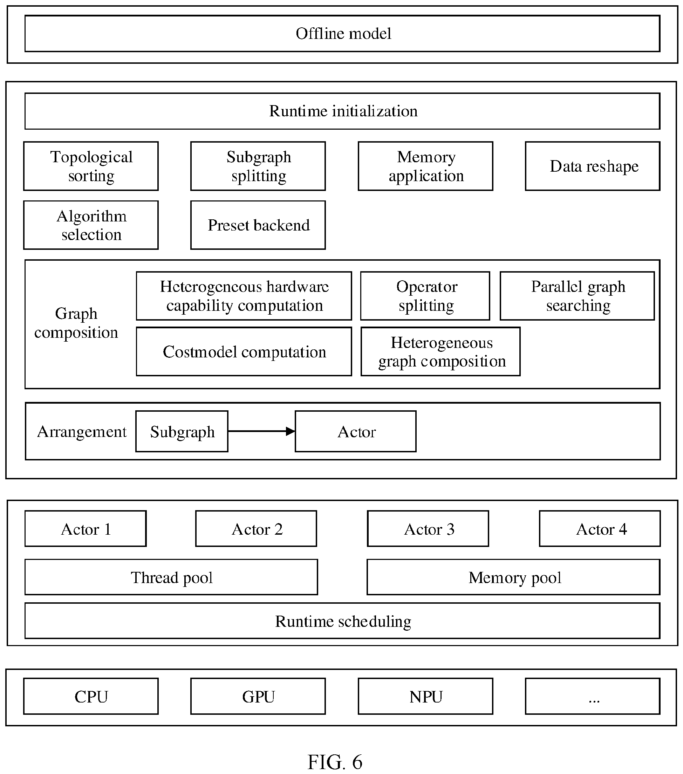

FIG. 6 shows an architecture of a device-side inference system according to an embodiment of this application.

Compared with the system architecture shown in FIG. 5, in the system architecture shown in FIG. 6, a graph composition operation is added in a runtime initialization phase, to obtain a heterogeneous graph. The heterogeneous graph is used to indicate a subgraph deployed on heterogeneous hardware.

For example, as shown in FIG. 6, the graph composition operation may include operations such as heterogeneous hardware capability calculation, operator splitting, parallel graph search, cost model (cost model) calculation, and heterogeneous graph composition.

The heterogeneous hardware capability calculation is to compute a computation capability of heterogeneous hardware.

For example, the computation capability of the heterogeneous hardware may be calculated based on features of the heterogeneous hardware, for example, a multiplication calculation rate, or a bandwidth limit of data transmission.

For specific descriptions of calculating the heterogeneous hardware capability, refer to step S710 in the method 700 or step S810 in the method 800. Details are not described herein again.

Operator splitting means performing operator splitting on a first subgraph in a first computation graph corresponding to a model, to obtain a second computation graph.

The cost model calculation refers to calculation of overheads of a computation graph.

For a specific description, refer to step S720 in the method 700 or step S820 in the method 800. Details are not described herein again.

The parallel graph search refers to searching for a combination of subgraphs suitable for parallel execution in a computation graph.

For a specific description, refer to the method 700 or step S830 in the method 800. Details are not described herein again.

It should be noted that parallel graph search is an optional action.

Heterogeneous graph composition refers to construction of a heterogeneous parallel graph. The heterogeneous parallel graph is used to indicate hardware corresponding to each subgraph.

To construct a heterogeneous parallel graph is to select corresponding hardware for each subgraph and deploy the hardware.

For a specific description, refer to step S730 in the method 700 or step S840 in the method 800.

An asynchronous scheduling framework is introduced in the system architecture to implement parallel inference of a heterogeneous graph on heterogeneous hardware.

For example, as shown in FIG. 6, the asynchronous scheduling framework may be implemented by using an Actor model. Alternatively, the asynchronous scheduling framework may be implemented in another form provided that asynchronous scheduling can be implemented. This is not limited in this embodiment of this application.

As shown in FIG. 6, when the asynchronous scheduling framework uses the Actor model, the runtime initialization phase further includes an arrangement operation.

Specifically, a subgraph (subgraph) in the heterogeneous graph is converted into an Actor, and a behavior of the Actor is defined. Behaviors of the Actor may include a pretext behavior, an execution behavior, and a post behavior. For a specific implementation of the arrangement, refer to the method 700 or step S850 in the method 800 below.

It should be noted that the arrangement operation in the runtime initialization phase is corresponding to the Actor model of the asynchronous scheduling framework. If the asynchronous scheduling framework is implemented in another form, the arrangement operation in the running initialization phase may be correspondingly adjusted to adapt to the asynchronous scheduling framework, or the runtime initialization phase may not include the arrangement operation.

Model operation can be performed based on an arranged actor list. For example, a heterogeneous parallel operation is performed based on an Actor 1, an Actor 2, an Actor 3, and an Actor 4 in FIG. 6.

It should be understood that, in FIG. 6, only a system architecture of device-side inference is used as an example for description, and an application scenario of the solutions in embodiments of this application is not limited.

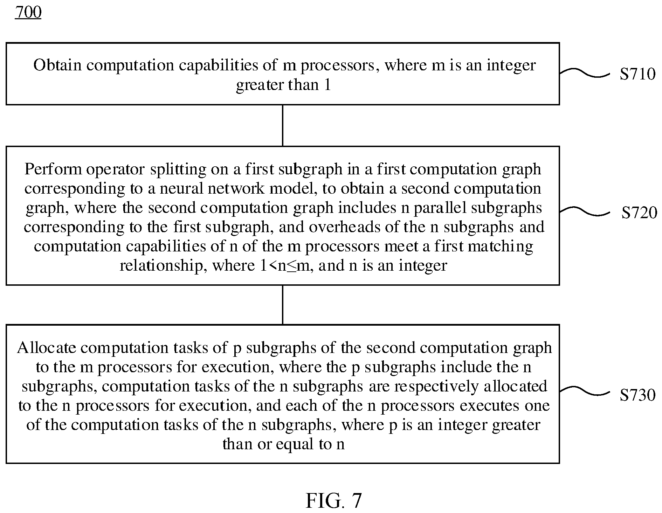

The following describes in detail a neural network model processing method in an embodiment of this application with reference to FIG. 7.

FIG. 7 shows a neural network model processing method 700 according to an embodiment of this application. The method shown in FIG. 7 may be performed by a neural network model execution apparatus. The apparatus may be a cloud service device, or may be a terminal device, for example, an apparatus that has a computation capability sufficient to perform a neural network model operation, such as a computer or a server, or may be a system including a cloud service device and a terminal device.

The method 700 may be applied to an inference scenario of a neural network model, or may be applied to a training scenario of a neural network model.

For example, if the method 700 is applied to an inference scenario of a neural network model, the method 700 may be performed by the execution device 110 in FIG. 2, the execution device 310 or the local device in FIG. 4. For example, if the method 700 is applied to a training scenario of a neural network model, the method 700 may be performed by the training device 120 in FIG. 2 or the execution device 310 in FIG. 4.

The method 700 includes step S710 to step S730. The following describes step S710 and step S730 in detail.

S710: Obtain computation capabilities of m processors. The m processors are configured to perform an operation of a neural network model, where m is an integer greater than 1.

For example, when the method 700 is applied to a device-side scenario, that is, when the method 700 is performed by the terminal device, the m processors may be understood as m chips or m pieces of hardware. In the terminal device, the m processors are m processors of different types. In other words, the m processors are m pieces of heterogeneous hardware in the terminal device. The m pieces of heterogeneous hardware are different types of hardware that can jointly perform an operation of the neural network model.

For example, the m processors may include a central processing unit (central processing unit, CPU), or may include a neural network operation processor. The neural network operation processor may include a graphics processing unit (graphics processing unit, GPU), a neural network processor (neural network processing unit, NPU), a tensor processor (tensor processing unit, TPU), and the like. The TPU is an artificial intelligence accelerator-specific integrated circuit customized by Google (Google) for machine learning. For example, m may be 2, that is, the terminal device may include two processors, and the two processors may be a CPU and a GPU. For another example, m may be 3, that is, the terminal device may include three processors, and the three processors may be a CPU, a GPU, and an NPU.

In a distributed system, the m processors may alternatively be understood as m worker nodes. The m worker nodes may be worker nodes of a same type, or may be worker nodes of different types. The m processors may include at least one type of a single-core processor or a multi-core processor. This is not limited in this embodiment of this application.

A computation capability of the processor may be understood as a computation amount that can be carried by the processor, or a computation amount that is suitable for the processor to carry. The computation capability of the processor may also be referred to as a carrying capability of the processor.

Specifically, the computation capability of the processor may be calculated according to features of the processor, for example, a multiplication calculation rate, or a bandwidth limit of data transmission.

A specific calculation manner of the computation capabilities of the m processors may be set based on an actual requirement. This is not limited in this embodiment of this application.

The neural network model in this embodiment of this application may be an existing neural network model, for example, a CNN model, a residual network model, or a cyclic neural network model. Alternatively, the neural network model in this embodiment of this application may be constructed by a user. This is not limited in this embodiment of this application.

The solutions in embodiments of this application can be applied to a plurality of fields, and a type of an application field is related to a task of a neural network model. For example, if the neural network model is used for an image processing task, the solutions in embodiments of this application may be applied to the computer vision field. Specifically, the image processing task includes image classification, image detection, image splitting, image recognition, image generation, or the like. For another example, if the neural network model is used for a text processing task, the solutions in |embodiments of this application may be applied to the natural language processing field. Specifically, the text processing task includes text recognition, text translation, or the like. For another example, if the neural network model is used for a speech processing task, the solutions in embodiments of this application may be applied to the speech processing field. Specifically, the speech processing task includes speech recognition and the like. This is not limited in embodiments of this application.

Step S710 may be performed by one of the m processors, or may be performed by another apparatus other than the m processors. This is not limited in this embodiment of this application.

S720: Performing operator splitting on a first subgraph in a first computation graph corresponding to the neural network model, to obtain a second computation graph, where the second computation graph includes n parallel subgraphs corresponding to the first subgraph, overheads of the n subgraphs and computation capabilities of n of the m processors meet a first matching relationship, where $1 < n \leq m$, and n is an integer.

The computation graph corresponding to a neural network model is used to indicate a computation process of the neural network model. In other words, the computation graph corresponding to the neural network model may be understood as a representation form of the computation process of the neural network model.

The first computation graph corresponding to the neural network model may be an initial computation graph.

For example, when the method 700 is applied to an inference scenario, the neural network model may be a model identified by an inference framework.

The operator is used to execute a computation task in the neural network model. For example, the operator may be understood as a network layer in the neural network model. For example, a convolution operator may be understood as a convolution layer in a neural network model.

The operator splitting may be understood as splitting of a computation task corresponding to an operator.

The n parallel subgraphs are n subgraphs that can be executed in parallel. In other words, computation tasks corresponding to the n parallel subgraphs can be executed in parallel. That is, a subgraph including an operator is split into subgraphs including a plurality of operators that can be executed in parallel, or in other words, split into a plurality of subgraphs that can be executed in parallel.

The n parallel subgraphs corresponding to the first subgraph are n subgraphs obtained by performing operator splitting on the first subgraph.

In other words, operator splitting is performed on the first subgraph to obtain n parallel subgraphs, and the first subgraph in the first computation graph is replaced with the n subgraphs, to obtain the second computation graph.

For example, the overheads of the subgraph may be calculated by using the cost model in the architecture shown in FIG. 6.

For example, the overheads of the subgraph may include computation overheads of the subgraph. The computation overheads of the subgraph are computation overheads of all operators in the subgraph.

Further, the overheads of the subgraph may further include communication overheads of the subgraph.

The first subgraph is split into the n parallel subgraphs in an operator splitting manner. A computation amount of the first subgraph may be equal to a sum of computation amounts of the n subgraphs.

That the overheads of the n subgraphs and the computation capabilities of the n of the m processors meet the first matching relationship may alternatively means that the overheads of the n subgraphs match the computation capabilities of the n of the m processors.

Specifically, the first subgraph is split into n parallel subgraphs based on the computation capabilities of the n of the m processors.

In other words, according to the solution in this embodiment of this application, a difference between computation capabilities of different processors can be sensed. Based on this, the first subgraph is split.

The overheads of the n subgraphs match the computation capabilities of the n processors. For example, if a subgraph A in the n subgraphs matches a computation capability of a processor A in the n processors, there is a correspondence between the subgraph A and the processor A. That is, the n subgraphs are in a one-to-one correspondence with the n processors. The correspondence may be used to determine a manner of deploying the computation tasks of the n subgraphs in step S730.

n and m may be the same or may be different. In other words, a quantity of parallel subgraphs may be the same as or different from a quantity of processors.

It should be noted that there may be one or more first subgraphs. If there are a plurality of first subgraphs, each first subgraph may be split to obtain a plurality of parallel subgraphs corresponding to each first subgraph. A quantity of parallel subgraphs obtained after different first subgraphs are split may be the same, or may be different. This is not limited in embodiments of this application.

Step S720 may be performed by one of the m processors, or may be performed by another apparatus other than the m processors. This is not limited in this embodiment of this application.

S730: Allocate computation tasks of p subgraphs of the second computation graph to the m processors for execution, where the p subgraphs includes the n subgraphs, computation tasks of the n subgraphs are respectively allocated to the n processors for execution, each of the n processors executes one of the computation tasks of the n subgraphs, where p is an integer greater than or equal to n.

When the second computation graph is split into the p subgraphs, each of the n subgraphs may be used as one of the p subgraphs.

That the computation tasks of the p subgraphs of the second computation graph are allocated to the m processors for execution may also be understood as that the p subgraphs are deployed on the m processors, that is, processors configured to execute corresponding computation tasks are selected from the m processors for the p subgraphs, and the p subgraphs are deployed on the m processors. During runtime, the m processors are scheduled to execute computation tasks of the p subgraphs of the second computation graph. The m processors execute the computation tasks of the p subgraphs to complete a neural network model operation, or the m processors may complete a neural network model operation based on the p subgraphs.

When the m processors are heterogeneous hardware, a process of selecting and deploying hardware for the subgraph may also be referred to as a heterogeneous graph composition process. The heterogeneous graph is used to indicate heterogeneous hardware corresponding to the p subgraphs. In other words, the heterogeneous graph is used to indicate subgraphs deployed on heterogeneous hardware. The n subgraphs in the p subgraphs are parallel subgraphs. In this case, the heterogeneous graph may also be referred to as a heterogeneous parallel graph.

One subgraph is deployed on one processor, and one processor may be deployed with a plurality of subgraphs.

The second computation graph may be split into the p subgraphs, and a specific division manner may be set based on a requirement.

For example, a plurality of operators in a topology order may form one subgraph. One subgraph is implemented by one hardware device. In this way, a plurality of topology-ordered operators can be executed on a same processor, to reduce communication overheads. For another example, a single operator may also form a subgraph.

As described above, the overheads of the n subgraphs match the computation capabilities of the n processors. There is a correspondence between the n subgraphs and the n processors. In other words, the overheads of the n subgraphs match the computation capabilities of the n processors, and there is a correspondence between the n subgraphs and the n processors. That the computation tasks of the n subgraphs are respectively allocated to the n processors for execution specifically means that the computation tasks of the n subgraphs are respectively allocated to processors whose computation capabilities match the overheads of the n subgraphs for execution, that is, the computation tasks of the n subgraphs are respectively allocated to processors corresponding to the n subgraphs for execution. That is, the computation tasks of the n subgraphs are deployed based on a deployment manner defined for the n subgraphs when operator splitting is performed.

As an example, step S730 may be performed by one of the m processors, or may be performed by another apparatus other than the m processors. This is not limited in this embodiment of this application.

In this embodiment of this application, operator splitting is performed on the first subgraph based on computation capabilities of different processors, to obtain a plurality of parallel subgraphs that match the computation capabilities of the different processors, so that computation tasks of the plurality of parallel subgraphs can be executed in parallel on processors that match the computation capabilities. This helps appropriately use hardware resources, to improve model processing efficiency.

For example, that overheads of the n subgraphs match the computation capabilities of the n processors may include: The overheads of the n subgraphs are less than or equal to the computation capabilities of the n processors.

That is, that the overhead matches the computation capability may be that the overhead is less than or equal to the computation capability.

However, a computation result of the first subgraph can be obtained only after all the computation tasks of the n subgraphs are executed. A subgraph on which execution is completed needs to wait for computation of the other parallel subgraphs to be completed, that is, a computation time of the n subgraphs depends on a longest computation time of the n subgraphs. In the foregoing matching manner, a processor with a low computation capability may process a computation task of a subgraph with high overheads, which causes a long time consumption and affects a computation time of the n subgraphs.

Optionally, that the overheads of the n subgraphs and the computation capabilities of the n processors meet the first matching relationship may include: A difference between a ratio of the overheads of the n subgraphs and a ratio of the computation capabilities of the n processors is less than or equal to a first threshold.

For example, if the n subgraphs are two subgraphs, and a ratio of overheads of the two subgraphs to computation capabilities of two of the m processors is less than or equal to the first threshold, the overheads of the two subgraphs match the computation capabilities of the two processors.

Alternatively, the n subgraphs belong to one of a plurality of combinations of candidate subgraphs, each combination of candidate subgraphs includes n candidate subgraphs corresponding to the first subgraph, and in the plurality of combinations of candidate subgraphs, a difference between a ratio of overheads of the n subgraphs and a ratio of computation capabilities of the n processors is minimum, and the overheads of the n subgraphs and the computation capabilities of the n processors meet the first matching relationship.

In this way, it can be ensured that a processor with a high computation capability executes a computation task of a subgraph with high overheads, and a processor with a low computation capability executes of a computation task of a subgraph with low overheads, to improve an adaptation degree between a computation capability of a processor and overheads of a subgraph, and help further improve model processing efficiency.

Optionally, overheads of the first subgraph are greater than overheads of at least half of subgraphs of the first computation graph.

Optionally, the overheads of the first subgraph are greater than or equal to a second threshold.

For example, the second threshold may be determined based on a computation capability of the processor.

In this way, operator splitting is performed only on a subgraph with high overheads, to help ensure that performance improvement caused by parallel execution exceeds introduced communication overheads, so as to improve model processing efficiency. In addition, when the plurality of processors cannot share a memory, the processor needs to store a parameter of an operator in a subgraph that needs to be executed, to execute a computation task of the subgraph. According to the solution in this embodiment of this application, operator splitting is performed only on a subgraph with high overheads, so that excessive memory overheads caused by operator splitting can be avoided.

Further, when the first subgraph includes a plurality of operators, an execution order of all operators in the first subgraph is serial execution.

The execution order of the plurality of operators is the serial execution. Specifically, the plurality of operators in the first subgraph are topologically ordered.

In other words, the first subgraph may be a graph structure that has high overheads and does not include an operator executed in parallel.

A computation amount of a convolution operator is usually large. For example, the first subgraph may be a continuous convolution structure, that is, the first subgraph may include a plurality of continuous convolution operators.

For example, a convolution operator may include various types of convolution operators such as a convolution (convolution) operator or a convolution depthwise (Convolution Depthwise) operator.

It should be understood that only a convolution operator is used as an example for description herein. The plurality of operators in the first subgraph may also include other types of operators, for example, a fully connected operator.

For example, a graph structure, or the first subgraph, that is suitable for performing operator splitting may be searched for in the first computation graph, to further perform operator splitting on the first subgraph, to obtain the second computation graph.

After a single operator is split, that is, after a computation task of the operator is split, computation tasks obtained after the splitting of the operator needs to be allocated to corresponding processors for execution. After the processors execute the computation tasks obtained after the splitting, a computation result of the operator can be obtained only by merging computation results of the processors. Communication overheads caused by splitting of the single operator are large.

In the solution of this embodiment of this application, the first subgraph includes a plurality of topologically ordered operators, and operator splitting is performed on the first subgraph, and the computation tasks of n subgraphs obtained after operator splitting are allocated to corresponding processors. In other words, after computation tasks of the plurality of operators are split, computation tasks obtained after splitting are allocated to corresponding processors, and after the processors complete, based on a topological order, the computation tasks obtained after splitting, computation results of the processors are merged, a computation result of the first subgraph is obtained. In this way, communication overheads introduced by splitting can be reduced, and model processing efficiency is ensured. In other words, when executing computation tasks of the plurality of operators, the processor does not need to allocate the computation task of each operator, and does not need to merge computation results of all operators obtained after splitting. Instead, the processors executes computation tasks of the plurality of operators obtained after splitting based on a topology order and then merges the computation results. Compared with splitting of a single operator, this solution can reduce communication overheads and improve model processing efficiency.

Input data of the n subgraphs is obtained by performing data splitting on input data of the first subgraph.

The splitting operation on the input data may be implemented by introducing a split operator.

Optionally, the second computation graph further includes a split operator, and the split operator is used to split the input data of the first subgraph to obtain the input data of the n subgraphs.

Weights of the n subgraphs and weights of operators of the first subgraph may be the same. In other words, operator splitting does not change the weights of the operators in the first subgraph. Different processors may execute different computation tasks in parallel based on a same weight. Differences of the computation tasks are caused by splitting of input data. In other words, the differences of the computation tasks are caused by different input data.

For example, an operator B and an operator C are obtained after an operator A is split, and weights of the operator A, the operator B, and the operator C are the same. Input data A of the operator A is split to obtain input data B of the operator B and input data C of the operator C. Computation tasks of the operator A, the operator B, and the operator C are different because the input data of the three operators is different.

Common data in a neural network model may be represented as data of four dimensions, and the four dimensions are respectively a batch size (batch, N), a quantity of channels (channel, C), a height (height, H), and a width (width, W).

Specifically, the input data of the n subgraphs is obtained by performing data splitting on the input data of the first subgraph based on any one of the following dimensions: a batch size N of the input data, a quantity C of channels of the input data, a height H of the input data, or a width W of the input data.

Performing splitting based on any one of the foregoing dimensions may also be referred to as performing splitting based on any one of the foregoing axes. For example, performing splitting based on a height dimension of the input data may also be referred to as performing splitting based on an H axis of the input data.

Optionally, a dimension of the data splitting is determined based on a data arrangement status of the input data of the first subgraph. Specifically, input data of each of the n subgraphs is continuous data in data arrangement of the input data of the first subgraph.

Determining the dimension of the data splitting based on the data arrangement status helps ensure that input data obtained after splitting is continuous data, that is, the input data obtained after splitting is continuously read during reading, to avoid excessive overheads caused by reading data by jumping, and help ensure processing performance of the model.

Further, when the data arrangement of the input data includes a batch N, a height H, a width W, and a quantity C of channels, the input data of the n subgraphs is obtained by splitting the input data of the first subgraph based on a height dimension.

That the data arrangement includes the batch N, the height H, the width W, and the quantity C of channels means that data is sequentially arranged in a sequence of a C axis, a W axis, an H axis, and an N axis. That is, C-axis data is continuous data. After the C-axis data is arranged, W-axis data is arranged. After the C-axis data is arranged, H-axis data is arranged. After the H-axis data is arranged, N-axis data is arranged.

For example, $1 \times 2 \times 2 \times 3$ data is data whose batch is 1, height is 2, width is 2, and a quantity of channels is 3, and data of three channels is represented in a form of the following three matrices:

$$\begin{bmatrix} a & b \\ c & d \end{bmatrix}; \begin{bmatrix} a' & b' \\ c' & d' \end{bmatrix}; \begin{bmatrix} a'' & b'' \\ c'' & d'' \end{bmatrix}$$

When data arrangement is NHWC, the $1 \times 2 \times 2 \times 3$ data may be expressed as:

$$\left[a,a',a'',b,b',b'',c,c',c'',d,d',d''\right]$$

In this case, data splitting is performed based on the H axis, so that it can be ensured that data obtained after splitting is still continuous data.

When the method 700 is applied to an inference scenario, the batch size N of the input data is usually 1. In this case, the input data cannot be split in the dimension. When being split based on the H axis, data obtained after splitting is continuous data. However, if splitting is performed based on the W axis and the C axis, data needs to be read by jumping, that is, data is read at an interval, which increases overheads of bottom-layer data synchronization. Consequently, processing performance of the model cannot be improved. In the solution in this embodiment of this application, the input data is split based on the H axis, and the computation tasks are allocated to the different processors for parallel processing, to effectively improve processing performance of the model.

It should be understood that the foregoing description is merely an example. If the data arrangement is another arrangement manner, another dimension may also be used for splitting. For example, if the data arrangement of the input data is NWHC, the dimension of splitting may alternatively be a width dimension.

Optionally, when an operator in the first subgraph is a convolution-type operator, and a slide stride of the convolution-type operator is less than a height of a convolution kernel, some data in input data of at least two of the n subgraphs is the same.

Alternatively, when an operator in the first subgraph is a convolution-type operator, and a slide stride of the convolution-type operator is less than a width of a convolution kernel, some data in input data of at least two of the n subgraphs is the same.

That is, the input data of at least two of the n subgraphs overlaps. Specifically, the input data of at least two of the n subgraphs overlaps in the height dimension. In other words, the input data of the first subgraph is split with overlap, to obtain the input data of the n subgraphs.

It should be noted that when the input data is split based on the H axis, a height of the input data obtained after splitting is greater than or equal to a height of a convolution kernel.

Output data of the first subgraph is obtained by merging output data of the n subgraphs.

A merging operation on the output data can be implemented by introducing a merge operator.

Optionally, the second computation graph further includes a merge operator, and the merge operator is used to merge the output data of the n subgraphs, to obtain the output data of the first subgraph.

For example, step S720 may be specifically implemented in the following manner: performing operator splitting on the first subgraph in the first computation graph to obtain n parallel subgraphs, replacing the first subgraph in the first computation graph with the n subgraphs, introducing a split operator before the n subgraphs are input, and introducing a merge operator after the n subgraphs are output, so that an obtained computation graph is the second computation graph.

For example, the split operator may be a SplitWithOverlap (SplitWithOverlap) operator. The SplitWithOverlap operator is used to split input data with overlap. For example, the merge operator may be a Concat operator.

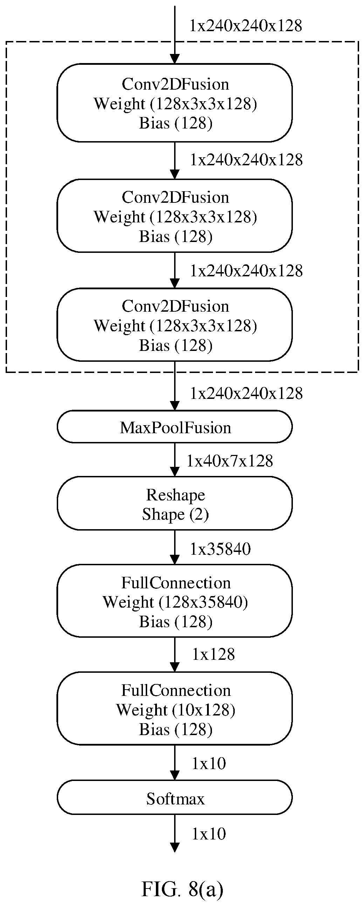

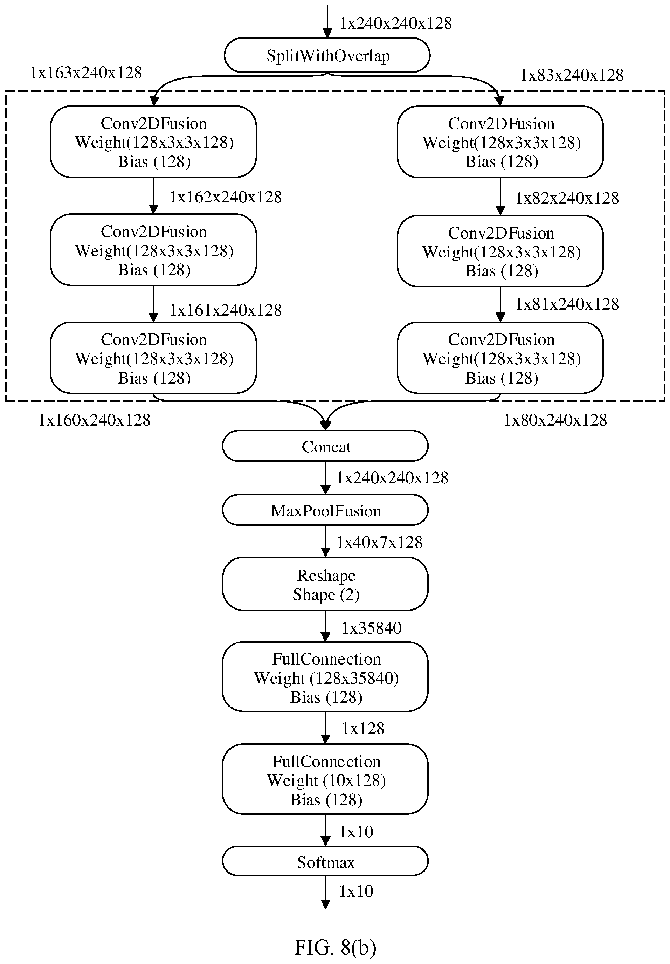

The following describes a splitting operation of input data and a merging operation of output data with reference to FIG. 8.

FIG. 8 shows a first computation graph of a neural network model. The first computation graph includes three consecutive convolution-type operators, a maximum pooling (MaxPoolFusion) operator, a reshape (Reshape) operator, two consecutive full connection (FullConnection) operators, and a classification (Softmax) operator. The convolution operator is a Conv2DFusion operator in FIG. 8. The Reshape operator is used to change dimension information of input data of the Reshape operator. The Reshape operator does not change a total data amount of input data or a value of the input data.

Data in FIG. 8 is represented based on dimension data NHWC. For example, $1 \times 240 \times 240 \times 128$ indicates that for the data, a batch is 1, a height is 240, a width is 240, and a quantity of channels is 128. A size of a weight (weight) of the Conv2DFusion operator is $128 \times 3 \times 3 \times 128$, and a size of a bias (bias) is 128. A size of a weight of one FullConnection operator is $128 \times 35840$, and a size of a bias is 128. A size of a weight of the other FullConnection operator is $10 \times 128$, and a size of a bias is 128. A parameter of the Reshape operator is represented as shape (2), that is, a size of the shape parameter is 2, that is, two dimensions, indicating the dimension information of the output data. In FIG. 8, a dimension of input data of the Reshape operator is $1 \times 40 \times 7 \times 128$, and there are 35840 pieces of data in total. The shape (2) is (1, 35840), that is, a dimension of the output data is $1 \times 35840$.

The first subgraph is shown in a dashed box in FIG. 8(a), and the first subgraph includes the three consecutive convolution operators.

Operator splitting is performed on the first subgraph, to obtain two parallel subgraphs, and a SplitWithOverlap operator is introduced before the two parallel subgraphs are input, to split the input data of the first subgraph. A Concat operator is introduced after an output of the two parallel subgraph structures, to merge computation results of the two parallel subgraphs. An obtained second computation graph is shown in FIG. 8(b).

For example, the SplitWithOverlap operator may include the following parameters: a split dimension (split dimension, slip_dim), a split number (number split), a split ratio (ratio), and an overlapping parameter.

For example, the overlapping parameter may specifically include a size of an upward extension (extend_top) of input data obtained after splitting and a size of a downward extension (extend_bottom) of the input data obtained after splitting.

The split dim is used to indicate an axis based on which splitting is performed, the number split is used to indicate a value of n, and the ratio is used to indicate a ratio of a computation amount of the n parallel subgraphs. extend_top is used to indicate an upward extension size of data after splitting based on the ratio, and extend_bottom is used to indicate a downward extension size of data after splitting based on the ratio.

For example, split_dim may be an H axis, that is, the H axis is split. If number split is 2, the first subgraph is split into two parallel subgraphs. The ratio is 83:157. That is, data whose height is 240 is split into two pieces of data whose heights are 83 and 157 that are heights of two output data. If a conventional splitting manner is used, height ranges of the two pieces of input data obtained after splitting are respectively [0, 82] and [83, 239]. When the extend_top is (0,6), a first 0 indicates that a first piece of the two pieces of input data obtained after splitting, that is, data whose height range is [0, 82], is extended upward on the H axis by 0, that is, a height range is still [0, 82], and a second 6 indicates that a second piece of the input data, that is, data whose height range is [83, 239], is extended upward on the H axis by 6, that is, a height range is changed to [77, 239]. When the extend_bottom is (0,0), a first 0 indicates that the first piece of the two pieces of input data obtained after splitting, that is, the data whose height range is [0, 82], is extended downward on the H axis by 0, that is, the height range is still [0, 82], and a second 0 indicates that the second piece of the input data, that is, the data whose height range is [77, 239], is extended downward on the H axis by 0, that is, the height range is changed to [77, 239]. In this way, splitting lengths of the two pieces of input data after splitting are respectively 83 and 163, and respectively occupy data whose height range is [0, 82] and data whose height range is [77, 239] in the original input data.

It should be understood that the foregoing description is merely an example, and the SplitWithOverlap operator may further include more or fewer parameters. For example, the SplitWithOverlap operator may not include the split dim parameter.

A dimension of input data of the first subgraph in FIG. 8 is $1 \times 240 \times 240 \times 128$, and the input data is split into two pieces of data after being processed by using the SplitWithOverlap operator. Dimensions of the two pieces of data are respectively $1 \times 163 \times 240 \times 128$ and $1 \times 83 \times 240 \times 128$. Heights of the two pieces of data are 163 and 83 respectively, and a sum of the two values is greater than 240. Therefore, it can be learned that the two pieces of data are overlapped in the height dimension. The two pieces of data are separately processed by using three convolution-type operators in two parallel subgraphs. Dimensions of data obtained after being processed by using the two parallel subgraphs are respectively $1 \times 160 \times 240 \times 128$ and $1 \times 80 \times 240 \times 128$. The two pieces of data are merged by using the concat operator to obtain data of a dimension of $1 \times 240 \times 240 \times 128$. The data is transferred to the MaxPoolFusion operator. The merged output data is consistent with the output data of the first subgraph in FIG. 8(a).

A height range of the input data of the first subgraph is [0,239], and the dimensions of the two pieces of data obtained after splitting are respectively $1 \times 83 \times 240 \times 128$ and $1 \times 163 \times 240 \times 128$. The heights of the two pieces of data are respectively 83 and 163, and corresponding height ranges are respectively [0,82] and [77,239]. In other words, data in a range of 77 to 82 is required by both the two pieces of data obtained after splitting, that is, the two pieces of data obtained after splitting have an overlapping part in the height dimension.

When the first subgraph includes a convolution operator, if splitting with overlap is not performed, after being merged, a computation result after splitting may be inconsistent with a computation result of the original first subgraph.

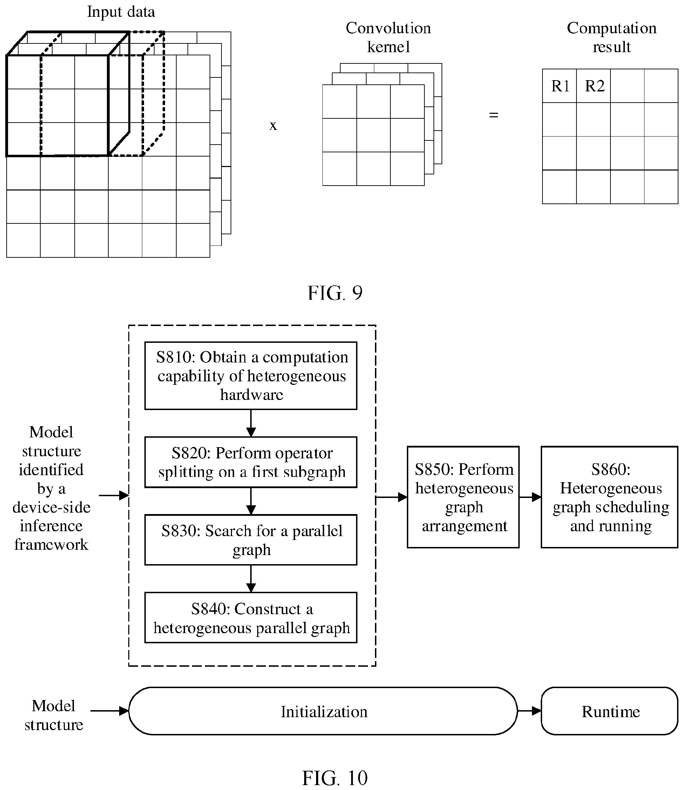

The following describes a calculation process of a convolution operator in FIG. 9. As shown in FIG. 9, a value at a location of R1 in a computation result matrix is obtained through computation based on data in a solid-line box in input data, a value at a location of R2 in the computation result matrix is obtained through computation based on data in a dashed-line box in the input data, and the data in the solid-line box and the data in the dashed-line box partially overlap. If the input data is split in a conventional splitting manner, after being merged, a computation result after splitting cannot be consistent with an original computation result of the operator.

A dimension of an output result of the convolution operator may be determined based on a related parameter of the convolution operator. The related parameters of the convolution operator may include: a dimension of input data of the convolution operator, a dimension of a convolution kernel, a slide stride, and a padding (pad) parameter. In other words, when the dimension of the input data of the convolution operator, the dimension of the convolution kernel, the slide stride, and the padding (pad) parameter are determined, a dimension of a data result of the convolution operator is determined.

Specifically, values of heights of the input data of the n subgraphs is determined based on the ratio of overheads of the n subgraphs.

For example, a ratio of overheads of the two parallel subgraphs in FIG. 8(b) is 83:157. If the input data is split based on the conventional splitting manner, height ranges of the two pieces of data obtained after splitting is [0, 82] and [83, 239] respectively. To ensure that input data of the subgraph in FIG. 8(b) and input data of the MaxPoolFusion operator are consistent with input data in FIG. 8(a), splitting with overlap is performed on the input data. The height ranges of the two pieces of data obtained after splitting may be reversely deduced based on the ratio and the related parameter of the convolution operator in the first subgraph, which are respectively [0,82] and [77,239].

In other words, the extend_top and the extend_bottom in the SplitWithOverlap operator are determined based on the ratio of the overheads of the n parallel subgraphs and the related parameter of the convolution operator.

It should be understood that the foregoing values are merely examples, and constitute no limitation on the solutions in embodiments of this application.

In this embodiment of this application, when the operator in the first subgraph is the convolution-type operator, splitting with overlap of input data can ensure that a result of output data of the first subgraph and a result obtained after output data of the n subgraphs are merged is the same, to ensure that a computation result of the second computation graph is the same as a computation result of the first computation graph.

Optionally, the p subgraphs of the second computation graph include q parallel subgraphs in the first computation graph. computation tasks of the q subgraphs are respectively allocated to q of the m processors for execution, each of the q processors executes one of the computation tasks of the q subgraphs, and overheads of the q subgraphs and computation capabilities of the q processors meet a second matching relationship, where q is an integer greater than 1.

For ease of description, a combination including the q subgraphs is referred to as a first subgraph combination.

The p subgraphs may include one or more combinations of subgraphs. A plurality of subgraphs in each combination of subgraphs are subgraphs that can be executed in parallel.

That the overheads of the q subgraphs and the computation capabilities of the q processors meet the second matching relationship may also be referred to as that the overheads of the q subgraphs match the computation capabilities of the q processors.

Specifically, the q subgraphs are deployed according to the computation capabilities of the m processors.

n parallel subgraphs obtained by performing operator splitting on one first subgraph are one combination of subgraphs. Correspondingly, each of the n subgraphs may be used as a subgraph in the combination of subgraphs.

For example, the one or more combinations of parallel subgraphs may be obtained through parallel graph search.

For example, parallel graph search is performed on the first computation graph, that is, an initial computation graph of the neural network model, to obtain subgraphs that can be executed in parallel, and the one or more combinations of parallel subgraphs are obtained based on the subgraphs that can be executed in parallel. In this case, the one or more combinations of parallel subgraphs do not include the n subgraphs corresponding to the first subgraph.

For another example, parallel graph search is performed in the second computation graph, to obtain subgraphs that can be executed in parallel, so as to obtain one or more combinations of parallel subgraphs. In this case, the one or more combinations of parallel subgraphs include the n subgraphs corresponding to the first subgraph.

For ease of description, the following uses an example in which a first combination of subgraphs is not a combination of subgraphs including the n subgraphs for description.

The parallel graph search may be implemented in an existing directed graph search manner. This is not limited in this embodiment of this application.

Overheads of subgraphs that can be executed in parallel in the first computation graph may not exactly match computation capabilities of the processors. In this way, a matching degree between the overheads of the q subgraphs in the first subgraph combination and the computation capabilities of the q processors may be lower than a matching degree between the overheads of the n subgraphs corresponding to the first subgraph and the computation capabilities of the n processors.

In this case, a plurality of subgraphs that can be executed in parallel may be combined to obtain a plurality of candidate combinations, and one candidate combination is selected from the plurality of candidate combinations as the first subgraph combination based on the computation capabilities of the processors.

For example, a candidate combination whose overhead ratio of q subgraphs in the plurality of candidate combinations is closest to a ratio of the computation capabilities of the q processors is used as the first subgraph combination.

For example, three subgraphs that can be executed in parallel are found in the first computation graph: a subgraph 1, a subgraph 2, and a subgraph 3, where m is 2, and a ratio of computation capabilities of two processors is 1:2. The subgraph 1 and the subgraph 2 form a subgraph 1, the subgraph 3 forms a subgraph 1', and the subgraph 1 and the subgraph 1' may be used as a candidate combination. By analogy, the three subgraphs may form a plurality of candidate combinations. In the plurality of candidate combinations, a candidate combination whose subgraph overhead ratio is closest to 1:2 is the first subgraph combination.

In this embodiment of this application, subgraphs that can be executed in parallel are deployed on a plurality of processors based on computation capabilities of different processors, so that computation tasks of the plurality of parallel subgraphs can be executed in parallel on the processors that match the computation capabilities, and hardware resources are appropriately used, to improve model processing efficiency.

It should be noted that, that the plurality of processors can execute the plurality of subgraphs in parallel means that processes of executing the plurality of subgraphs by the plurality of processors are independent of each other, the plurality of processors may execute the plurality of subgraphs at the same time, and "parallel execution" does not limit a start time or an end time of "execution". That is, the plurality of processors execute the plurality of subgraphs in parallel, which does not mean that the plurality of processors need to start executing the plurality of subgraphs at the same time, or end executing the plurality of subgraphs at the same time.

By executing the p subgraphs by using an asynchronous scheduling framework, a corresponding processor may be scheduled to execute a computation task of each subgraph in the combination of subgraphs in parallel.

The asynchronous scheduling framework may use an existing solution. For example, the asynchronous scheduling framework may use an Actor model.

The following uses the Actor model as an example to describe a specific implementation of step S730.

Optionally, step S730 includes: converting the p subgraphs into p Actors, and scheduling, in an execution process of the p Actors, the m processors to execute computation tasks of the p subgraphs.

Behaviors of the p Actors are defined based on the computation tasks of the p subgraphs. The processors corresponding to the p subgraphs are processors that are allocated for the computation tasks of the p subgraphs.

In other words, the Actor framework is used to perform graph arrangement on the p subgraphs, convert the p subgraphs into the p Actors, define the behaviors of the Actors, and define, in a process of defining the behaviors of the Actors, a processor that executes a computation task. The subgraph and the Actor are in one-to-one correspondence.

An operation of the model can be performed based on an arranged list of Actors.

The Actors interact with each other through messages. The messages transfer data information between subgraphs. After receiving the message, the Actor triggers a behavior of the Actor. Each Actor is independently executed, and when a plurality of Actors are synchronously triggered, parallel execution may be implemented.

The behaviors of the Actor may include a pretext behavior, an execution behavior, and a post behavior.

The pretext behavior refers to an operation that needs to be performed by the Actor before the Actor performs a computation task.

The execution behavior refers to an operation that needs to be performed by the Actor to perform a computation task.

The post behavior refers to an operation that needs to be performed by the Actor after the Actor performs a computation task.

In a graph arrangement process, the pretext behavior, the execution behavior, and the post behavior of each of the p Actors may be separately defined.

For example, the pretext behavior, the execution behavior, and the post behavior of the Actor may be defined in the following manner.

Pretext behavior

(1) After the Actor is triggered, received data is stored in the Actor. The data is carried in the message received by the Actor.
(2) Check whether all input data is received. If only part of the input data is received, the Actor needs to wait for output messages from other Actors. If it is determined, through checking, that all input data of the Actors has been received, a subsequent behavior continues to be performed, that is, the execution behavior is performed.

The subgraph and the Actor are in one-to-one correspondence. All input data required by Actors for execution may be determined based on the subgraphs.

Execution behavior:

After checking on the pretext behavior of the Actor succeeds, a processor deployed for the subgraph corresponding to the Actor is parsed, and the processor is scheduled to execute the subgraph corresponding to the Actor, that is, execute a computation task in the subgraph.

The Actor may define information such as hardware for executing the subgraph and an execution operator. During execution by the Actor, a defined behavior may be run on preset hardware, that is, the processor selected in step S730.

EP 4 428 754 A1

Post behavior

After the subgraph corresponding to the Actor is executed, output data is sent.

If the output data is input data of another Actor, a message is sent to the another Actor to trigger the corresponding Actor. If the output data is an output of an entire graph, a promise (promise) of the entire graph is set, or a value (value) of the promise is set to a completion state. After all promises of the entire graph are set, execution ends and a computation result of the model is obtained. The entire graph is a complete computation graph corresponding to the model, for example, the first computation graph or the second computation graph.

The m processors may implement computation graph scheduling and execution based on the arranged list of Actors, that is, perform model computation.

It should be understood that the foregoing describes the solution in this embodiment of this application by using only the Actor framework as an example. The asynchronous scheduling framework in this embodiment of this application may alternatively be another framework. This is not limited in this embodiment of this application.

FIG. 10 shows a neural network model processing method 800 according to an embodiment of this application. The method 800 may be understood as a specific implementation of the method 700. For specific descriptions, refer to the method 700. To avoid repetition, some descriptions are properly omitted when the method 800 is described.

For example, the method 800 may run on a device-side device. In this case, the m processors in the method 700 are heterogeneous hardware. For example, the method 800 may be performed by using the framework shown in FIG. 6.

For ease of understanding and description, an example in which heterogeneous hardware is used to perform the method 800 is used to describe the solutions in embodiments of this application, and constitutes no limitation on the solutions in the embodiments of this application.

The method 800 includes step S810 to step S860. The following describes step S810 to step S860.

The method 800 may be performed in the initialization phase and the runtime phase in the framework shown in FIG. 6. Specifically, step S810 to step S850 are performed in the initialization phase, and step S860 is performed in the runtime phase.

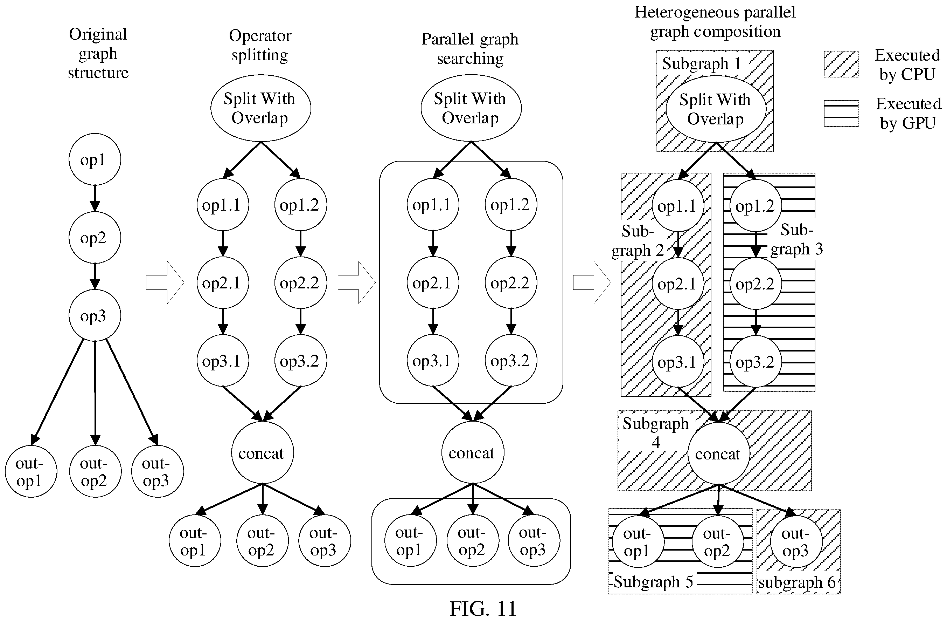

Step S810 to step S840 may be understood as a graph composition phase of a heterogeneous graph. FIG. 11 is a schematic diagram of a graph composition process of a heterogeneous parallel graph.

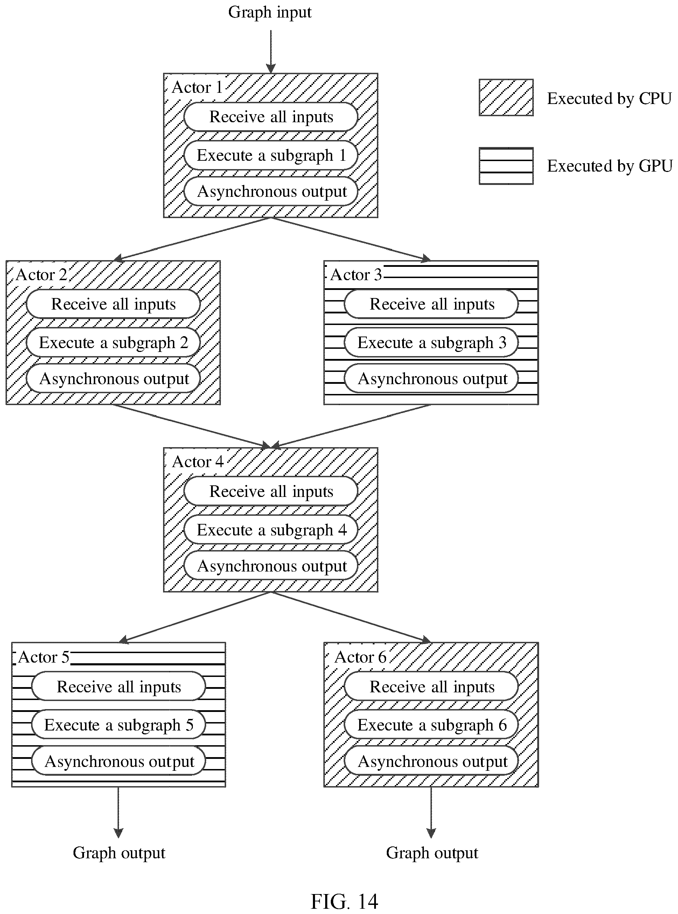

Step S850 to step S860 may be understood as a heterogeneous parallel execution phase. FIG. 14 shows a schematic flowchart of a heterogeneous parallel execution phase.

S810: Obtain a computation capability of each piece of heterogeneous hardware.

The computation capacity that can be carried by the heterogeneous hardware, that is, the computation capability, can be calculated based on features of the heterogeneous hardware.

Step S810 is corresponding to step S710 in the method 700. For a specific description, refer to step S710.

For ease of description, in the method 800, only two pieces of heterogeneous hardware are used as an example for description. For example, the two heterogeneous hardware may be a CPU and a GPU, and a computation capability ratio is approximately 1:2.

S820. Perform operator splitting on the first subgraph in the first computation graph.

Specifically, operator splitting on the first subgraph in the first computation graph is performed based on computation capabilities of heterogeneous hardware, to obtain the second computation graph.

The first computation graph is an initial computation graph of the model. For example, the first computation graph may be a computation graph corresponding to a model structure identified by the device-side inference framework in FIG. 10.

For example, step S820 may be implemented in the following manner: searching the first computation graph for a graph structure suitable for operator splitting, that is, the first subgraph; and splitting an operator in the first subgraph based on a computation capability of each heterogeneous hardware, to construct a graph structure suitable for parallel execution (that is, the parallel subgraph in the method 700), to obtain a second computation graph. That is, the second computation graph includes a graph structure suitable for parallel execution.

A graph structure suitable for operator splitting needs to meet a preset condition. For example, overheads are greater than or equal to a second threshold, and an execution sequence of the plurality of operators is serial execution.

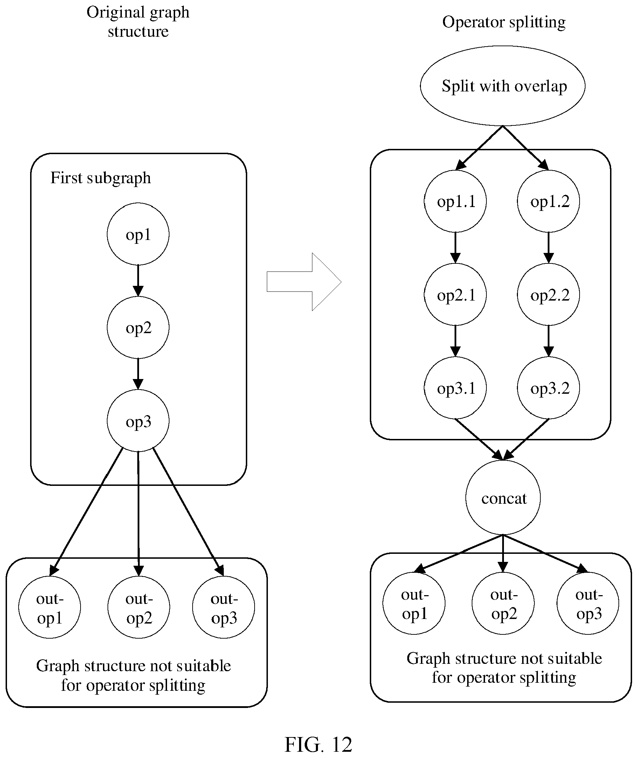

As shown in FIG. 12, an original graph result, that is, the first computation graph, includes six nodes, that is, six operators: op1, op2, op3, out-op1, out-op2, and out-op3. The three operators op1, op2, and op3 that are obtained through searching based on a topological order of the operators are topologically ordered and need to be executed in serial mode, and overheads of the three operators are greater than a second threshold, and the foregoing condition is met. In other words, the three operators are suitable for operator splitting, that is, a graph structure including the three operators is used as the first subgraph.

The three operators out-op1, out-op2, and out-op3 that are obtained through searching based on the topological order of the operators do not have a topological order in the first computation graph, that is, the three operators can

22

implement parallel computation in the first computation graph, and the foregoing condition is not met. In other words, the three operators are not suitable for operator splitting. A graph structure that is not suitable for operator splitting remains unchanged in the second computation graph.

It should be noted that a manner of determining the first subgraph in FIG. 12 is merely an example. In actual application, the first subgraph may be determined based on a requirement, for example, the first subgraph is determined based on a hardware configuration status. This is not limited in this embodiment of this application. For example, when there is a large quantity of pieces of hardware but a small computation capability, one or more operators with a large computation amount in the three operators out-op1, out-op2, and out-op3 may be split.

Operator splitting is performed on the first subgraph of the first computation graph, and a part that is not suitable for operator splitting is unchanged, to obtain the second computation graph.

For example, the heterogeneous hardware includes a CPU and a GPU. As shown in FIG. 12, the first subgraph is split into two parts (two parallel subgraphs): op1.1, op2.1, op3.1, and op1.2, op2.2, and op3.2. A sum of overheads of the two parts is the same as a computation amount of the three operators op1, op2, and op3 in the first computation graph. The overheads of op1.1, op2.1, and op3.1 match the overheads of op1.2, op2.2, and op3.2 and the computation capabilities of heterogeneous hardware. For example, the ratio of the computation capability of the CPU to the computation capability of the GPU obtained according to step S810 is approximately 1:2, and a ratio of a sum of overheads of op 1.1, op2.1 and op3.1 to a sum of overheads of op 1.2, op2.2, and op3.2 is 1:2.

To ensure that a computation result is completely the same as the computation result of the first computation graph, the input data needs to be split, and output data of parallel subgraph structures obtained after splitting is combined.

Specifically, a split operator is added before a parallel subgraph obtained after splitting, and a merge operator is added after the parallel subgraph obtained after splitting. In this way, the second computation graph obtained after splitting is equivalent to the first computation graph, which helps ensure that computation results of the second computation graph and the first computation graph are completely the same. In addition, it can be ensured that an input and an output of another part other than the first subgraph in the first computation graph is unchanged in the second computation graph, that is, computation of the another part is not affected.

In the device-side model, an operator with a large calculation amount is usually a convolution operator, and a subgraph suitable for operator splitting usually includes a convolution operator. Splitting with overlap is performed on input data of a convolution operator, so that accuracy of a computation result of a parallel subgraph obtained after splitting can be ensured. For a specific description, refer to FIG. 8 above. Details are not described herein again.

For example, the operator in the first subgraph shown in FIG. 12 may be a convolution operator, a SplitWithOverlap operator is added before the two parallel subgraphs, and a Concat operator is added after the two parallel subgraphs. The SplitWithOverlap operator is used to split input data with overlap. For a specific description of the operator, refer to FIG. 8 above. Details are not described herein again.

Step S820 is corresponding to step S720 in the method 700. For a specific description, refer to step S720.

S830: Search for a parallel graph.

For example, the second computation graph is searched to obtain a combination of subgraphs suitable for parallel execution.

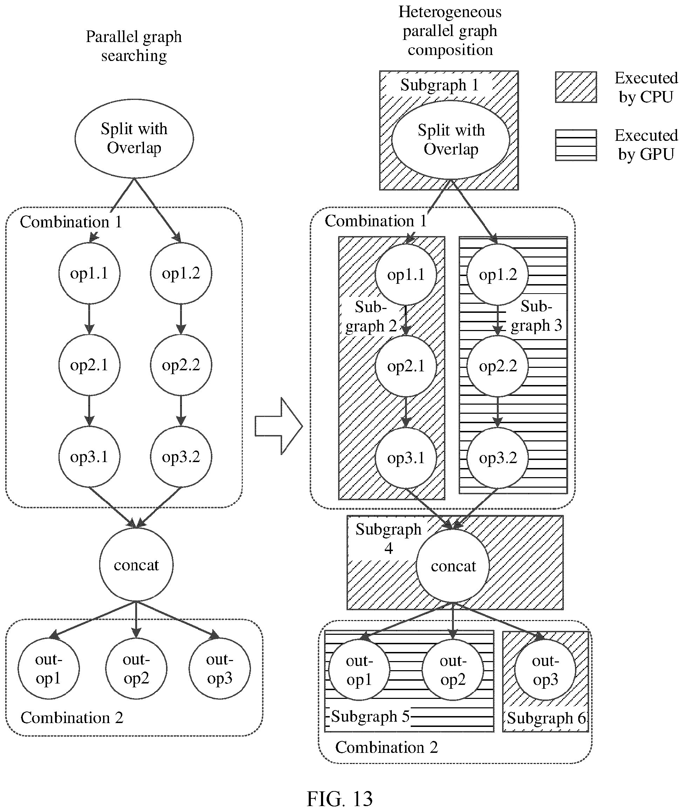

For example, two combinations, namely, a combination 1 and a combination 2, are obtained through searching the second computation graph shown in FIG. 13. The combination 1 is obtained by performing step S820, and the combination 2 is a combination of subgraphs that are suitable for parallel execution in the first computation graph.

S840: Construct a heterogeneous parallel graph.

Constructing the heterogeneous parallel graph is to implement composition of heterogeneous parallel graph. The heterogeneous parallel graph may also be referred to as a heterogeneous graph, and is a subgraph used for heterogeneous parallel execution. In other words, the heterogeneous parallel graph is used to indicate heterogeneous hardware used for execution of each subgraph.

A process of constructing a heterogeneous parallel graph may also be understood as a process of selecting and deploying hardware, that is, selecting hardware for each subgraph to execute a computation task of a corresponding subgraph.

For the combination found in step S830, a subgraph in the combination is deployed on the heterogeneous hardware based on a computation capability of the heterogeneous hardware, that is, a deployment manner needs to be as suitable as possible for the computation capability of the heterogeneous hardware.

The following uses the combination 1 and the combination 2 as an example for description.

The combination 1 is obtained through operator splitting in step S820, and two parallel subgraphs obtained after splitting can match a computation capability of heterogeneous hardware. The ratio of the computation capability of the CPU to the computation capability of the GPU is approximately 1:2, and the ratio of the sum of overheads of op 1.1, op2.1 and op3.1 to the sum of overheads of op1.2, op2.2, and op3.2 is 1:2.

For two parallel subgraphs in the combination 1, that is, a subgraph 2 and a subgraph 3, deployment is performed based on overheads of the two parallel subgraphs and the computation capability of the heterogeneous hardware, or deployment is performed based on a deployment manner defined during operator splitting. That is, the subgraph 2 is deployed on the CPU, and the subgraph 3 is deployed on the GPU.

The combination 2 is obtained by searching. Overheads of the subgraph in combination 2 may not completely match the computation capability of the heterogeneous hardware. In this case, the subgraph in the combination may be deployed in a manner with a highest matching degree of a computation capability of heterogeneous hardware.

For example, a ratio of overheads of a subgraph 5 including out-op1 and out-op2 to overheads of a subgraph 6 including the out-op3 is closest to 2:1. In this case, the subgraph 5 is deployed on the GPU, and the subgraph 6 is deployed on the CPU.

In the second computation graph, another subgraph other than the combination found in step S830, that is, a subgraph that cannot be executed in parallel, may be deployed by using an existing solution. This is not limited in this embodiment of this application. For example, a subgraph 1 and a subgraph 4 in FIG. 13 are deployed on the CPU.

Step S840 is corresponding to step S730 in the method 700. For a specific description, refer to step S730. Details are not described herein again.

S850: Perform heterogeneous graph arrangement.

An asynchronous scheduling framework is used to arrange a heterogeneous graph and convert a subgraph into an Actor.

Specifically, in an arrangement process of the heterogeneous graph, a behavior of the Actor is defined. For a specific description, refer to the description in S730. Details are not described herein again.

S860: Execute heterogeneous graph scheduling and running.

That is, a model operation is performed based on an arranged list of Actors.

Actors shown in FIG. 14 are respectively corresponding to subgraphs in FIG. 13, that is, an Actor 1, an Actor 2, an Actor 3, an Actor 4, an Actor 5, and an Actor 6 in FIG. 14 are respectively corresponding to the subgraph 1, the subgraph 2, the subgraph 3, the subgraph 4, the subgraph 5, and the subgraph 6 in FIG. 13.

The Actor 1, the Actor 2, the Actor 4, and the Actor 6 in FIG. 14 schedule CPUs to execute computation tasks in an execution process, and the Actor 3 and the Actor 5 schedule GPUs to execute computation tasks in an execution process. This is consistent with hardware indicated by the heterogeneous graph in FIG. 13.

The Actors in FIG. 14 interact with each other by using asynchronous data (async data). Correspondingly, an output of the Actor is an asynchronous output (async output).

Step S860 may be performed by using the following steps.

S1: After receiving an input (graph-input) of the computation graph, the Actor 1 triggers a pretext behavior of the Actor 1, that is, checks whether all inputs are received. After all inputs are received, an execution behavior of the Actor 1 is triggered, and a corresponding subgraph, that is, the subgraph 1, is executed on the CPU. After execution is complete, a post behavior of the Actor 1 is triggered. In the graph arrangement process, the post behavior of the Actor 1 is defined, that is, an output of the Actor 1 is preset to be sent to subsequent Actors, that is, the Actor 2 and the Actor 3 in FIG. 14. That is, after the execution is completed, the Actor 1 is triggered to send the output to the Actor 2 and the Actor 3.

S2: The Actor 2 and the Actor 3 respectively receive data sent by the Actor 1, and independently execute respective tasks. Because actions performed by the Actor 2 and the Actor 3 are similar, to avoid repetition, the following uses the Actor 2 as an example for description.

After receiving the data sent by the Actor 1, the Actor 2 triggers a pretext behavior of the Actor 2, that is, checks whether the Actor 2 receives all inputs. All inputs of the Actor 2 are data sent by the Actor 1.

After all inputs are received, an execution behavior of the Actor 2 is triggered, and a corresponding subgraph, that is, the subgraph 2, is executed on the CPU. Actions performed by the Actor 2 and the Actor 3 are similar, but the action of the Actor 2 is performed on the CPU, and the action of the Actor 3 is performed on the GPU. The two Actors are separately executed on different hardware and are independent of each other, that is, heterogeneous parallel execution is implemented.

After the execution is completed, a post behavior of the Actor 2 is triggered, that is, an output is sent to a subsequent Actor. Specifically, the Actor 2 and the Actor 3 respectively send respective outputs to the Actor 4.

S3: After receiving the output of the Actor 2 or the Actor 3, the Actor 4 triggers a pretext behavior.

The Actor 2 and the Actor 3 are executed concurrently, and execution time periods may be different. That is, the Actor 2 and the Actor 3 may not complete an operation at the same time. After one of the Actors, for example, the Actor 2, completes running, an output is sent to the Actor 4. After receiving the output of the Actor 2, the Actor 4 triggers a pretext behavior of the Actor 4, that is, checks whether all inputs are received. All inputs of the Actor 4 include data sent by Actor 2 and data sent by Actor 3. The Actor 4 detects a fact that all inputs are not received, and the Actor 4 continues to wait until the data sent by the Actor 3 is received. In this case, the pretext behavior of the Actor 4 is triggered again. The Actor 4 detects a fact that all inputs are received, and triggers an execution behavior of the Actor 4, to execute a corresponding subgraph, that is, the subgraph 4, on the CPU. After the execution is completed, a post behavior of the Actor 4 is triggered, that is, an output is sent to subsequent Actors, that is, the Actor 5 and the Actor 6 in FIG. 14.

S4: The Actor 5 and the Actor 6 respectively receive data sent by the Actor 4, and independently execute respective tasks. Execution processes of the Actor 5 and the Actor 6 are similar to execution processes of the Actor 2 and the Actor 3. To avoid repetition, the following uses the Actor 5 as an example for description.

After receiving the data sent by the Actor 4, the Actor 5 triggers a pretext behavior of the Actor 5, that is, checks whether the Actor 5 receives all inputs. All inputs of the Actor 5 are data sent by the Actor 4.

After all inputs are received, an execution behavior of the Actor 5 is triggered, and a corresponding subgraph, that is, the subgraph 5, is executed on the GPU. Actions performed by the Actor 5 and the Actor 6 are similar, but the action of the Actor 5 is performed on the GPU, and the action of the Actor 6 is performed on the CPU.

After execution is complete, a post behavior of the Actor 5 is triggered. Outputs of the Actor 5 and the Actor 6 are an output of an entire graph. As described above, in the post behaviors of Actor 5 and Actor 6, the outputs of the Actor 5 and the Actor 6 are defined as an output of the entire graph. After the execution is complete, the Actor 5 uses the output of the Actor 5 as the output of the entire graph, and sets a value (value) of promise of the output (output) of the entire graph, that is, sets a value of promise corresponding to the Actor 5 to a completed state. After the Actor 5 and the Actor 6 each set a value of promise for the output of the entire graph, all outputs of the entire graph are obtained, that is, an inference process is completed, and an inference result is obtained.

According to the solution in this embodiment of this application, a capability of heterogeneous hardware can be sensed to perform a graph composition operation, to obtain a heterogeneous graph suitable for heterogeneous parallel execution, and model inference is performed on the heterogeneous hardware, so that device-side inference performance can be improved. For some models, for example, MobilenetV1, performance is improved by 5% to 10%.

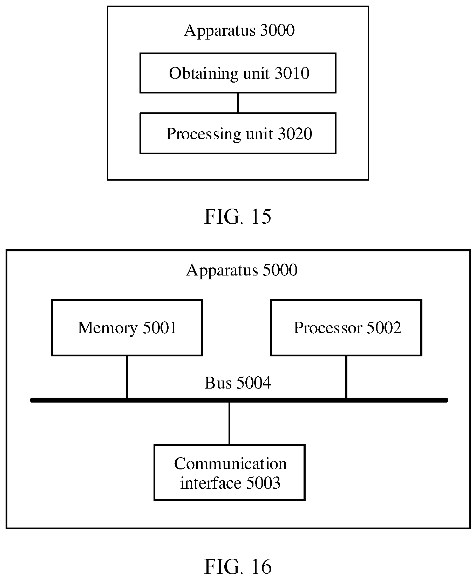

The following describes an apparatus in an embodiment of this application with reference to FIG. 15 to FIG. 16. It should be understood that the apparatus described below can perform the method in the foregoing embodiments of this application. To avoid unnecessary repetition, repeated descriptions are appropriately omitted when the apparatus in the embodiments of this application is described below.

FIG. 15 is a schematic block diagram of a neural network model processing apparatus according to an embodiment of this application. The neural network model processing apparatus 3000 shown in FIG. 15 includes an obtaining unit 3010 and a processing unit 3020.

The obtaining unit 3010 and the processing unit 3020 may be configured to perform the neural network model processing method in embodiments of this application, and may be specifically configured to perform the method 700 or the method 800.

An obtaining unit 3010 is configured to obtain computation capabilities of m processors, where m is an integer greater than 1.

The processing unit 3020 is configured to perform operator splitting on a first subgraph in a first computation graph corresponding to the neural network model, to obtain a second computation graph, where the second computation graph includes n parallel subgraphs corresponding to the first subgraph, overheads of the n subgraphs and computation capabilities of n of the m processors meet a first matching relationship, where $1<n\leq m$, and n is an integer; and allocate computation tasks of p subgraphs of the second computation graph to the m processors for execution, where the p subgraphs includes the n subgraphs, computation tasks of the n subgraphs are respectively allocated to the n processors for execution, each of the n processors executes one of the computation tasks of the n subgraphs, where p is an integer greater than or equal to n.

Optionally, overheads of the first subgraph are greater than overheads of at least half of subgraphs of the first computation graph.

Optionally, when the first subgraph includes a plurality of operators, an execution order of all operators in the first subgraph is serial execution.

Optionally, input data of the n subgraphs is obtained by performing data splitting on input data of the first subgraph. A dimension of the data splitting is determined based on a data arrangement status of the input data of the first subgraph.

Optionally, when an operator in the first subgraph is a convolution-type operator, and a slide stride of the convolution-type operator is less than a height of a convolution kernel, some data in input data of at least two of the n subgraphs is the same.

Optionally, that overheads of the n subgraphs and computation capabilities of n of the m processors meet a first matching relationship includes: A difference between a ratio of the overheads of the n subgraphs and a ratio of the computation capabilities of the n processors is less than or equal to a first threshold.

Optionally, the p subgraphs include q parallel subgraphs in the first computation graph, computation tasks of the q subgraphs are respectively allocated to q of the m processors for execution, and overheads of the q subgraphs and computation capabilities of the q processors meet a second matching relationship, where q is an integer greater than 1.

Optionally, the processing unit 3020 is configured to convert the p subgraphs into p actors Actor respectively; and schedule, in an execution process of the p Actors, the m processors to execute the computation tasks of the p subgraphs.

It should be noted that the processing apparatus 3000 is embodied in a form of a functional unit. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, in the examples described in the embodiments of this application, the units can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 16 is a schematic diagram of a hardware structure of a neural network model processing apparatus according to an embodiment of this application. The neural network model processing apparatus 5000 (the apparatus 5000 may be specifically a computer device) shown in FIG. 16 includes a memory 5001, a processor 5002, a communication interface 5003, and a bus 5004. The memory 5001, the processor 5002, and the communication interface 5003 are communicatively connected to each other through the bus 5004.

The memory 5001 may be a read-only memory (read-only memory, ROM), a static storage device, a dynamic storage device, or a random access memory (random access memory, RAM). The memory 5001 may store a program. When the program stored in the memory 5001 is executed by the processor 5002, the processor 5002 is configured to perform steps of the neural network model processing method in embodiments of this application. For example, the processor 5002 may perform the method 700 shown in FIG. 7 or the method 800 shown in FIG. 10.

The processor 5002 may use a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the neural network model processing method in the method embodiments of this application.

The processor 5002 may alternatively be an integrated circuit chip and has a signal processing capability. In an implementation process, the steps in the neural network model processing method in this application may be completed by using an integrated logic circuit in hardware in the processor 5002 or instructions in a form of software.

The processor 5002 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by units included in the processing apparatus shown in FIG. 15, or performs the neural network model processing method shown in FIG. 7 or FIG. 10 in the method embodiments of this application.

The communication interface 5003 uses a transceiver apparatus, for example, but not limited to, a transceiver, to implement communication between the apparatus 5000 and another device or a communications network. For example, the first computation graph corresponding to the neural network model may be obtained by using the communication interface 5003.

The bus 5004 may include a channel through which information is transmitted between parts (for example, the memory 5001, the processor 5002, and the communication interface 5003) of the apparatus 5000.

An embodiment of this application further provides a computer-readable medium. The computer-readable medium stores program code to be executed by a device, and the program code includes the neural network model processing method in embodiments of this application.

An embodiment of this application further provides a computer program product including instructions. When the computer program product is run on a computer, the computer is enabled to perform the neural network model processing method in embodiments of this application.

An embodiment of this application further provides a chip. The chip includes a processor and a data interface. The processor reads, by using the data interface, instructions stored in a memory, to perform the neural network model processing method in embodiments of this application.

Optionally, in an implementation, the chip may further include a memory. The memory stores instructions. The processor is configured to execute the instructions stored in the memory. When the instructions are executed, the processor is configured to perform the neural network model processing method in the embodiments of this application.

It should be understood that, the processor in the embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, a-b, a-c, b-c, or a-b-c, where a, b, and c may exist alone or in parallel.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network model processing method, comprising:

   obtaining computation capabilities of m processors, wherein m is an integer greater than 1;
   performing operator splitting on a first subgraph in a first computation graph corresponding to the neural network model, to obtain a second computation graph, wherein the second computation graph comprises n parallel subgraphs corresponding to the first subgraph, overheads of the n subgraphs and computation capabilities of n of the m processors meet a first matching relationship, wherein 1<n≤m, and n is an integer; and
   respectively allocating computation tasks of p subgraphs of the second computation graph to the m processors for execution, wherein the p subgraphs comprise the n subgraphs, computation tasks of the n subgraphs are respectively allocated to the n processors for execution, each of the n processors executes one of the computation tasks of the n subgraphs, wherein p is an integer greater than or equal to n.

2. The method according to claim 1, wherein overheads of the first subgraph are greater than overheads of at least half of subgraphs of the first computation graph.

3. The method according to claim 1 or 2, wherein when the first subgraph comprises a plurality of operators, an execution order of all operators in the first subgraph is serial execution.

4. The method according to any one of claims 1 to 3, wherein input data of the n subgraphs is obtained by performing data splitting on input data of the first subgraph, and when an operator in the first subgraph is a convolution-type operator, and a slide stride of the convolution-type operator is less than a height of a convolution kernel, some data in input data of at least two of the n subgraphs is the same.

5. The method according to any one of claims 1 to 4, wherein that overheads of the n subgraphs and computation capabilities of n of the m processors meet a first matching relationship comprises:
   a difference between a ratio of the overheads of the n subgraphs and a ratio of the computation capabilities of the n processors is less than or equal to a first threshold.

6. The method according to any one of claims 1 to 5, wherein the p subgraphs comprise q parallel subgraphs in the first computation graph, computation tasks of the q subgraphs are allocated to q of the m processors for execution, each of the q processors executes one of the computation tasks of the q subgraphs, and overheads of the q subgraphs and computation capabilities of the q processors meet a second matching relationship, wherein q is an integer greater than 1.

7. The method according to any one of claims 1 to 6, wherein the allocating computation tasks of p subgraphs of the second computation graph to the m processors for execution comprises:

converting the p subgraphs into p actors Actor respectively; and
scheduling, in an execution process of the p Actors, the m processors to execute the computation tasks of the p subgraphs.

8. A neural network model processing apparatus, comprising:

an obtaining unit, configured to obtain computation capabilities of m processors, wherein m is an integer greater than 1;
a processing unit, configured to perform operator splitting on a first subgraph in a first computation graph corresponding to the neural network model, to obtain a second computation graph, wherein the second computation graph comprises n parallel subgraphs corresponding to the first subgraph, overheads of the n subgraphs and computation capabilities of n of the m processors meet a first matching relationship, wherein $1<n\leq m$, and n is an integer; and
allocate computation tasks of p subgraphs of the second computation graph to the m processors for execution, wherein the p subgraphs comprise the n subgraphs, computation tasks of the n subgraphs are respectively allocated to the n processors for execution, each of the n processors executes one of the computation tasks of the n subgraphs, wherein p is an integer greater than or equal to n.

9. The apparatus according to claim 8, wherein overheads of the first subgraph are greater than overheads of at least half of subgraphs of the first computation graph.

10. The apparatus according to claim 8 or 9, wherein when the first subgraph comprises a plurality of operators, an execution order of all operators in the first subgraph is serial execution.

11. The apparatus according to any one of claims 8 to 10, wherein input data of the n subgraphs is obtained by performing data splitting on input data of the first subgraph, and when an operator in the first subgraph is a convolution-type operator, and a slide stride of the convolution-type operator is less than a height of a convolution kernel, some data in input data of at least two of the n subgraphs is the same.

12. The apparatus according to any one of claims 8 to 11, wherein that overheads of the n subgraphs and computation capabilities of n of the m processors meet a first matching relationship comprises:
a difference between a ratio of the overheads of the n subgraphs and a ratio of the computation capabilities of the n processors is less than or equal to a first threshold.

13. The apparatus according to any one of claims 8 to 12, wherein the p subgraphs comprise q parallel subgraphs in the first computation graph, computation tasks of the q subgraphs are allocated to q of the m processors for execution, and each of the q processors executes one of the computation tasks of the q subgraphs, wherein q is an integer greater than 1.

14. The apparatus according to any one of claims 8 to 13, wherein the processing unit is specifically configured to:

convert the p subgraphs into p actors Actor respectively; and
schedule, in an execution process of the p Actors, the m processors to execute the computation tasks of the p subgraphs.

15. A neural network model processing apparatus, comprising a processor and a memory, wherein the memory is configured to store program instructions, and the processor is configured to invoke the program instructions to perform the method according to any one of claims 1 to 7.

16. A computer-readable storage medium, wherein the computer-readable medium stores program code to be executed by a device, and the program code is used for performing the method according to any one of claims 1 to 7.

17. A computer program product, wherein when the computer program product is run on a computer, the computer is enabled to perform the method according to any one of claims 1 to 7.

Intelligent information chain

Intelligent product and industry application

| General capabilities | Translation/Text analysis/... | Speech/Vision/Image/... |

| Data | Data processing | Data training/Machine learning/Deep learning | Search/Inference/ Decision making | ... |

| Infrastructure | Sensor | Intelligent chip | Basic platform | ... |

IT value chain

FIG. 1

System architecture 100

Data collection device 160

Data flow

Database 130

Training device 120

Data flow

Execution device 110

Client device 140

Input data

I/O interface 112

Target model/rule 101

Computing module 111

Data storage system 150

Output result

FIG. 2

FIG. 3

300

FIG. 4

| Three party model + conversion tool | Self-owned graph composition interface |
|---|---|
| Device-side framework IR | |

**Runtime initialization**

| Topological sorting | Subgraph splitting | Memory application | Data reshape |
|---|---|---|---|
| Algorithm selection | Preset backend | | |

**Runtime scheduling**

| Thread pool | Memory pool |
|---|---|

Subgraph 1 → Subgraph 2 → Subgraph 3 → Subgraph 4

| CPU | GPU | NPU | ... |
|---|---|---|---|

FIG. 5

| Offline model |
|---|

| Runtime initialization |
|---|

| Topological sorting | Subgraph splitting | Memory application | Data reshape |

| Algorithm selection | Preset backend |

Graph composition

| Heterogeneous hardware capability computation | Operator splitting | Parallel graph searching |
| Costmodel computation | Heterogeneous graph composition |

Arrangement | Subgraph | → | Actor |

| Actor 1 | Actor 2 | Actor 3 | Actor 4 |

| Thread pool | Memory pool |

| Runtime scheduling |

| CPU | GPU | NPU | ... |

FIG. 6

700

| Obtain computation capabilities of m processors, where m is an integer greater than 1 | S710 |

| Perform operator splitting on a first subgraph in a first computation graph corresponding to a neural network model, to obtain a second computation graph, where the second computation graph includes n parallel subgraphs corresponding to the first subgraph, and overheads of the n subgraphs and computation capabilities of n of the m processors meet a first matching relationship, where $1 < n \leq m$, and n is an integer | S720 |

| Allocate computation tasks of p subgraphs of the second computation graph to the m processors for execution, where the p subgraphs include the n subgraphs, computation tasks of the n subgraphs are respectively allocated to the n processors for execution, and each of the n processors executes one of the computation tasks of the n subgraphs, where p is an integer greater than or equal to n | S730 |

FIG. 7

FIG. 8(a)

1x240x240x128

SplitWithOverlap

1x163x240x128

1x83x240x128

Conv2DFusion
Weight(128x3x3x128)
Bias (128)

Conv2DFusion
Weight(128x3x3x128)
Bias (128)

1x162x240x128

1x82x240x128

Conv2DFusion
Weight(128x3x3x128)
Bias (128)

Conv2DFusion
Weight(128x3x3x128)
Bias (128)

1x161x240x128

1x81x240x128

Conv2DFusion
Weight(128x3x3x128)
Bias (128)

Conv2DFusion
Weight(128x3x3x128)
Bias (128)

1x160x240x128

1x80x240x128

Concat

1x240x240x128

MaxPoolFusion

1x40x7x128

Reshape
Shape (2)

1x35840

FullConnection
Weight (128x35840)
Bias (128)

1x128

FullConnection
Weight (10x128)
Bias (128)

1x10

Softmax

1x10

FIG. 8(b)

Input data

Convolution kernel

Computation result

| R1 | R2 | | |
|----|----|--|--|
| | | | |
| | | | |
| | | | |

x

=

FIG. 9

S810: Obtain a computation capability of heterogeneous hardware

Model structure identified by a device-side inference framework

S820: Perform operator splitting on a first subgraph

S830: Search for a parallel graph

S840: Construct a heterogeneous parallel graph

S850: Perform heterogeneous graph arrangement

S860: Heterogeneous graph scheduling and running

Model structure

Initialization

Runtime

FIG. 10

Original
graph
structure

Operator
splitting

Parallel graph
searching

Heterogeneous parallel
graph composition

Executed
by CPU

Executed
by GPU

FIG. 11

FIG. 12

FIG. 13

Graph input

Actor 1
- Receive all inputs
- Execute a subgraph 1
- Asynchronous output

Executed by CPU

Executed by GPU

Actor 2
- Receive all inputs
- Execute a subgraph 2
- Asynchronous output

Actor 3
- Receive all inputs
- Execute a subgraph 3
- Asynchronous output

Actor 4
- Receive all inputs
- Execute a subgraph 4
- Asynchronous output

Actor 5
- Receive all inputs
- Execute a subgraph 5
- Asynchronous output

Actor 6
- Receive all inputs
- Execute a subgraph 6
- Asynchronous output

Graph output

Graph output

FIG. 14

Apparatus 3000

Obtaining unit 3010

Processing unit 3020

FIG. 15

Apparatus 5000

Memory 5001

Processor 5002

Bus 5004

Communication
interface 5003

FIG. 16

## INTERNATIONAL SEARCH REPORT

| International application No. |
| --- |
| **PCT/CN2022/133524** |

| A. | CLASSIFICATION OF SUBJECT MATTER |
| --- | --- |

G06N3/04(2023.01)i;G06N3/08(2023.01)i

According to International Patent Classification (IPC) or to both national classification and IPC

| B. | FIELDS SEARCHED |
| --- | --- |

Minimum documentation searched (classification system followed by classification symbols)

IPC: G06N3/-; G06F9/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 神经网络, 模型, 处理器, 切, 分割, 卷积, CNN, 子图, 开销, 匹配, 计算能力, 算力, 滑动步长, 卷积核, 算子, 异构, neural network, model, processor, segment, cut, convolution, subgraph, overhead, match, computing power, sliding step length, stride, convolution kernel, operator, heterogeneous

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112598112 A (SHENZHEN UNIVERSITY) 02 April 2021 (2021-04-02) description, paragraphs [0060]-[0109] | 1-3, 5, 7-10, 12, 14-17 |
| Y | CN 112598112 A (SHENZHEN UNIVERSITY) 02 April 2021 (2021-04-02) description, paragraphs [0060]-[0109] | 4-7, 11-17 |
| Y | CN 113159285 A (GUANGZHOU FANGXIN TECHNOLOGY CO., LTD.) 23 July 2021 (2021-07-23) description, paragraphs [0040]-[0070] | 4-7, 11-17 |
| Y | CN 111738434 A (INSTITUTE OF COMPUTING TECHNOLOGY, CHINESE ACADEMY OF SCIENCES) 02 October 2020 (2020-10-02) description, paragraphs [0024]-[0078] | 6, 7, 13-17 |
| A | CN 109918199 A (SUZHOU RESEARCH INSTITUTE, UNIVERSITY OF SCIENCE AND TECHNOLOGY OF CHINA) 21 June 2019 (2019-06-21) entire document | 1-17 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **01 February 2023** | **07 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/133524**

| Patent document cited in search report | | | Publication date (day/month/year) | Patent family member(s) | | | Publication date (day/month/year) |
|---|---|---|---|---|---|---|---|
| CN | 112598112 | A | 02 April 2021 | CN | 112598112 | B | 10 September 2021 |
| | | | | WO | 2022116142 | A1 | 09 June 2022 |
| CN | 113159285 | A | 23 July 2021 | None | | | |
| CN | 111738434 | A | 02 October 2020 | None | | | |
| CN | 109918199 | A | 21 June 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111405768